# EUROPEAN PATENT SPECIFICATION

(11) **EP 2 781 444 B1**
(45) Date of publication and mention of the grant of the patent: **18.01.2017**
(21) Application number: 13192190.0
(22) Date of filing: 08.11.2013
(51) Int. Cl.: B62K 19/46, B62J 17/02, B62J 6/00

(54) **Saddle type vehicle**
Motorrad
Véhicule à selle

(30) Priority: 22.03.2013 JP 2013060610
(43) Date of publication of application: 24.09.2014
(73) Proprietor: Yamaha Hatsudoki Kabushiki Kaisha, Iwata-shi, Shizuoka 438-8501 (JP)
(72) Inventor: Hasegawa, Hirofumi, 10540 Amphur Bangsaothong, Samutprakarn (TH); Phansua, Jaruwat, 10540, Amphur Bangsaothong, Samutprakarn (TH); Chaivoraporn, Ronachai, 10540 Amphur Bangsaothong, Samutprakarn (TH)
(74) Representative: Zimmermann, Tankred Klaus

(56) References cited:
- EP-A1- 2 017 168
- JP-A- 2012 001 202
- JP-B- 3 175 219
- US-A1- 2012 181 097

## Description

### BACKGROUND OF THE INVENTION

### 1. Field of the Invention

The present invention relates to a saddle type vehicle.

### 2. Description of the Related Art

A conventional saddle type vehicle disclosed by Japanese Unexamined Patent Publication No. 2012-1202 includes a front cover at which a headlight and two front flashers are disposed, a leg shield disposed behind the front cover, a storage pocket disposed at the leg shield, and a flat foot board on which the feet of a driver are placed. The front cover and the leg shield extend upwardly from a position at which the flat foot board is disposed. A riding space for the driver is defined between a seat and the leg shield in a front-rear direction.

As can be understood from FIG. 20 of Japanese Unexamined Patent Publication No. 2012-1202, the front cover is divided into three parts that are a central front cover (in this publication, a front cover 31) and two left and right front covers (in this publication, side covers 10L and 10R), respectively. The headlight is attached to the central front cover, and the two front flashers are attached to the two left and right front covers, respectively.

Additionally, as can be understood from a combination of FIGS. 11, 12, 13, and 15 of Japanese Unexamined Patent Publication No. 2012-1202, the outer edge of each front cover in a vehicle width direction is overlapped with the outer edge of the leg shield (in this publication, an inner cover 40) in the vehicle width direction. The outer edge portion of each front cover (the outer edge and a portion therenear) is fastened to the outer edge of the leg shield at a plurality of positions by a plurality of fasteners. A portion of the storage pocket is disposed at the same height as the front flasher.

EP 2 017 168 A1 describes a motorcycle having all the features of the preamble of claim 1 including a body cover of which a front cowl, and an upper member and a lower member of a leg shield have an overlapping portion tightened up with fasteners. The rigidity of the body cover can be improved by this arrangement. Also, the number of fasteners for tightening up the body cover can be reduced, and the tightening-up process can be simplified.

### SUMMARY OF THE INVENTION

It is an object of the present invention to provide an improved saddle type vehicle.

This object is achieved by the saddle type vehicle of claim 1

In the conventional saddle type vehicle of Japanese Unexamined Patent Publication No. 2012-1202, a lower portion of the headlight disposed at the front cover and an inner end of the front flasher are extremely close to each other. From the viewpoint of improving the discriminability between the headlight and the front flasher, it is preferable to make a large interval between the headlight and the front flasher. One method for widening the interval between the headlight and the front flasher is to enlarge the front cover.

However, in the saddle type vehicle that has been required to be made more compact, it is extremely difficult to enlarge the front cover. Therefore, in order to improved the discriminability between the headlight and the front flasher, there is a need to move the front flasher outwardly in the vehicle width direction. However, if this method is employed, the length in the vehicle width direction from the outer end of the front flasher to the outer edge of the front cover will be shortened, and the width of the outer edge portion of the left or right front cover (i.e., the width of a portion from the outer end of the front flasher to the outer edge of the front cover) will be narrowed.

On the other hand, from the viewpoint of convenience for the driver, it is preferable to make the storage pocket large in capacity. One method for increasing the capacity of the storage pocket is to expand the width (i.e., the length in the vehicle width direction) of the storage pocket. However, if the width of the storage pocket is expanded, the outer end of the storage pocket in the vehicle width direction will move outwardly, and therefore the length in the vehicle width direction from the outer end of the storage pocket to the outer edge of the leg shield will be shortened, and the width of the outer edge portion of the leg shield (i.e., the width of a portion from the outer end of the storage pocket to the outer edge of the leg shield) will be narrowed.

Additionally, vibrations, such as road surface vibrations resulting from the ruggedness of a road surface or engine vibrations, occur during the traveling of the saddle type vehicle. The vehicle body cover is required to have rigidity against such vibrations.

Additionally, the front cover and the leg shield extend upwardly from a low position at which the flat foot board is disposed. Therefore, the front cover and the leg shield are comparatively large in the up-down direction. Additionally, in order to secure a riding space in which the feet of the driver are placed while making the vehicle compact in the front-rear direction, the front cover and the leg shield are shaped to extend upwardly at a comparatively steep slant. This shape is also required to have consideration of vibrations.

As described above, if the width of the outer edge portion of the left or right front cover is narrowed to heighten the discriminability between the headlight and the front flasher, the rigidity of the outer edge portion of the front cover may fall, and the outer edge portion of the front cover may easily vibrate.

Additionally, if the width of the outer edge portion of the leg shield is narrowed to increase the capacity of the storage pocket, the rigidity of the outer edge portion of the leg shield may fall, and the outer edge portion of the leg shield may easily vibrate.

The outer edge portion of the front cover provided in the aforementioned conventional saddle type vehicle is fastened to the leg shield at a plurality of positions. However, in portions other than at the plurality of positions, the outer edge portion of the front cover and the outer edge portion of the leg shield are liable to easily vibrate.

It is also conceivable that vibrations are restrained by increasing parts at which fasteners are used in order to fasten the front cover and the leg shield together. However, if this method is employed, a space for setting a connection structure that connects the front cover and the leg shield together will be needed. Additionally, if such a connection structure is disposed between the front flasher and the storage pocket, it will be impossible to dispose the outer end of the storage pocket and the front flasher at a more outward position than the connection structure. In other words, the front flasher and the storage pocket cannot be disposed on a more outward side.

Therefore, one preferred embodiment of the present invention provides a saddle type vehicle including a vehicle body frame including a head tube disposed at a center of the vehicle in a vehicle width direction, a seat disposed at a more rearward position than the head tube, a flat foot board disposed at a lower position than the seat and at least a portion of which is disposed at a position more forward than the seat and more rearward than the head tube, a central front cover disposed in front of the head tube, a headlight at least a portion of which is disposed at the central front cover, an inner panel disposed behind the head tube and extending upwardly from the flat foot board, a storage pocket defined by the inner panel, a left-and-right pair of side front covers disposed at a more outward position in the vehicle width direction than the central front cover and the inner panel and extending upwardly from the flat foot board, and a front flasher at least a portion of which is disposed at the side front cover, in which the front flasher and at least a portion of the storage pocket overlap with each other when the vehicle is viewed frontally, in which the side front cover is formed structurally-independently of the central front cover and of the inner panel, in which the side front cover includes a front cover portion extending rearwardly and outwardly from the front flasher and a leg shield portion formed integrally with the front cover portion and extending rearwardly and inwardly from an outer edge of the front cover portion toward the storage pocket, and in which an integrally-formed portion of both the front cover portion and the leg shield portion extends from the flat foot board to a position higher than the front flasher.

According to this arrangement, the side front cover includes the front cover portion and the leg shield portion. The front cover portion and the leg shield portion are formed integrally with each other.

When the front flasher is moved outwardly in the vehicle width direction in order to heighten the discriminability between the headlight and the front flasher, the width of the outer edge portion of the front cover portion (i.e., a portion from the outer end of the front flasher to the outer edge of the front cover portion) is narrowed.

Additionally, when the length in the vehicle width direction of the storage pocket is increased in order to increase the capacity of the storage pocket, the width of the outer edge portion of the leg shield portion (i.e., a portion from the outer end of the storage pocket to the outer edge of the leg shield portion) is narrowed.

However, the front cover portion and the leg shield portion are formed integrally with each other, and therefore the outer edge portion of the front cover portion can be restrained from being reduced in rigidity even if the position at which the front flasher is disposed is moved more outwardly. Likewise, the front cover portion and the leg shield portion are formed integrally with each other, and therefore the outer edge portion of the leg shield portion can be restrained from being reduced in rigidity even if the length in the vehicle width direction of the storage pocket is increased. As a result, the discriminability between the headlight and the front flasher can be heightened, and the capacity of the storage pocket can be increased while securing the rigidity of the vehicle body cover.

Additionally, the front cover portion and the leg shield portion extend from the flat foot board to a position higher than the front flasher. Therefore, each of the front cover portion and the leg shield portion has a long shape in the up-down direction in which it is comparatively weak against vibrations in the vehicle width direction.

However, in the saddle type vehicle according to one preferred embodiment of the present invention, the front cover portion extends rearwardly and outwardly from the front flasher, and the leg shield portion formed integrally with the front cover portion extends from the outer edge of the front cover portion toward the storage pocket rearwardly and inwardly. Additionally, the integrally-formed portion between the front cover portion and the leg shield portion extends from the flat foot board to a position higher than the front flasher.

In other words, in the saddle type vehicle according to one preferred embodiment of the present invention, the cross section of the front cover portion and the cross section of the leg shield portion are shaped so as to be strong against vibrations in the vehicle width direction in addition to the fact that the front cover portion and the leg shield portion are formed integrally with each other. Additionally, the integrally-formed portion between the front cover portion and the leg shield portion extends from the flat foot board to a position higher than the front flasher, and therefore rigidity against vibrations in the vehicle width direction is heightened within a wide range in the up-down direction.

Additionally, the side front cover including the front cover portion and the leg shield portion is a member different from the central front cover and different from the inner panel. Therefore, the degree of freedom in the shape of the side front cover is higher than in a structure in which the side front cover is formed integrally with the central front cover and with the inner panel. Therefore, the side front cover can be formed into the aforementioned shape. Additionally, it is more difficult for the vibrations of the central front cover and the vibrations of the inner panel to be transmitted to the side front cover than in a structure in which the side front cover is formed integrally with the central front cover and with the inner panel. Therefore, the vibrations of the side front cover can be reduced.

In one preferred embodiment of the present invention, the front flasher may be disposed inside a flasher opening that is open at an outer surface of the side front cover. An outer end of the storage pocket may be disposed at a position more inward than an outer end of the flasher opening in the vehicle width direction and more outward than an inner end of the flasher opening in the vehicle width direction.

According to this arrangement, the outer end of the flasher opening at which the front flasher is disposed is disposed at a more outward position than the outer end of the storage pocket, and therefore at least a portion of the front flasher is disposed at a more outward position than the outer end of the storage pocket. As a result, the front flasher occupies a more outward position, and the discriminability of the front flasher is heightened. Moreover, the inner end of the flasher opening is disposed at a more inward position than the outer end of the storage pocket, and therefore the width of the storage pocket (the length in the vehicle width direction) is expanded, and the capacity of the storage pocket is increased. Additionally, although the width of the outer edge portion of the leg shield portion disposed at the side front cover is narrowed by expanding the width of the storage pocket, the capacity of the storage pocket can be increased while securing the rigidity of the vehicle body cover because the front cover portion and the leg shield portion are formed integrally with each other as mentioned above.

In one preferred embodiment of the present invention, a length in a front-rear direction from the outer edge of the front cover portion to a rear end of the leg shield portion may be smaller than a length in the front-rear direction from the outer edge of the front cover portion to a front end of the front cover portion in a cross section of the saddle type vehicle obtained by being cut by a horizontal plane passing through the front flasher and through the storage pocket.

The inner panel defines the storage pocket. The leg shield portion of the side front cover is connected to the inner panel. Therefore, there is a possibility that a vehicle occupant will catch his/her hands on the inner panel, and a load by the vehicle occupant will be input to the inner panel when the vehicle occupant takes an article into and from the storage pocket. The leg shield portion is connected to the inner panel as mentioned above, and therefore the load by the vehicle occupant is transmitted from the inner panel to the leg shield portion.

If the length in the front-rear direction from the outer edge of the front cover portion to the rear end of the leg shield portion is increased, the distance in the front-rear direction between the pocket forming portion of the inner panel equivalent to a power point to which the load by the vehicle occupant is input and the outer edge of the front cover portion equivalent to an operating point will be increased. Therefore, there is a possibility that a great force will be applied to the outer edge of the front cover portion when the vehicle occupant takes an article into and from the storage pocket. Therefore, a load applied to the side front cover can be reduced when the vehicle occupant takes the article into and from the storage pocket, and the capacity of the storage pocket can be increased by shortening the length in the front-rear direction from the outer edge of the front cover portion to the rear end of the leg shield portion.

In one preferred embodiment of the present invention, the leg shield portion may include an upper portion disposed at a higher position than the flasher opening, an intermediate portion disposed at a height between an upper end of the flasher opening and a lower end of the flasher opening, and a lower portion disposed at a lower position than the flasher opening. A minimum value of a length in the front-rear direction of the intermediate portion of the leg shield portion when the vehicle is viewed laterally may be smaller than a maximum value of a length in the front-rear direction of the upper portion of the leg shield portion when the vehicle is viewed laterally, and may be smaller than a maximum value of a length in the front-rear direction of the lower portion of the leg shield portion when the vehicle is viewed laterally.

According to this arrangement, the length in the front-rear direction of the intermediate portion of the leg shield portion when the vehicle is viewed laterally is smaller than the length in the front-rear direction of the upper portion of the leg shield portion when the vehicle is viewed laterally. Additionally, the length in the front-rear direction of the intermediate portion of the leg shield portion when the vehicle is viewed laterally is smaller than the length in the front-rear direction of the lower portion of the leg shield portion when the vehicle is viewed laterally. The length in the front-rear direction of the intermediate portion of the leg shield portion is thus small, and therefore the capacity of the storage pocket can be increased by expanding the width of the storage pocket. Additionally, even if the width of the storage pocket is expanded, the rigidity of the side front cover can be secured because the front cover portion and the leg shield portion are formed integrally with each other. Therefore, the capacity of the storage pocket can be secured while securing the rigidity of the vehicle body cover.

In one preferred embodiment of the present invention, the inner panel may include an upper portion disposed at a higher position than the storage pocket and a lower portion disposed at a lower position than the storage pocket. The leg shield portion may include an upper portion disposed at a higher position than the flasher opening, an intermediate portion disposed at a height between the upper end of the flasher opening and the lower end of the flasher opening, and a lower portion disposed at a lower position than the flasher opening. A maximum value of a length in the front-rear direction of the lower portion of the leg shield portion when the vehicle is viewed laterally may be greater than a maximum value of a length in the front-rear direction of the upper portion of the leg shield portion when the vehicle is viewed laterally. A maximum value of a length in the front-rear direction of the upper portion of the inner panel when the vehicle is viewed laterally may be greater than a maximum value of a length in the front-rear direction of the lower portion of the inner panel when the vehicle is viewed laterally.

The vehicle occupant puts his/her hand into the storage pocket from above the storage pocket. Therefore, it becomes easier for the vehicle occupant to put the hand into the storage pocket in proportion to a decrease in the length in the front-rear direction of the upper portion of the leg shield portion. According to this arrangement, the maximum value of the length in the front-rear direction of the lower portion of the leg shield portion when the vehicle is viewed laterally is greater than the maximum value of the length in the front-rear direction of the upper portion of the leg shield portion when the vehicle is viewed laterally. Therefore, the length in the front-rear direction of the upper portion of the leg shield portion is small, and it is easy for the vehicle occupant to put the hand into the storage pocket.

Additionally, although the maximum value of the length in the front-rear direction of the lower portion of the leg shield portion is comparatively large when the vehicle is viewed laterally, the maximum value of the length in the front-rear direction of the lower portion of the inner panel is comparatively small when the vehicle is viewed laterally, and therefore the length in the front-rear direction of a part including the leg shield portion and the inner panel can be restrained. As a result, a riding space in which the feet of the vehicle occupant (driver) are placed can be secured while restraining the front of the saddle type vehicle from being enlarged.

In one preferred embodiment of the present invention, the inner panel may include an upper portion disposed at a higher position than the storage pocket and a lower portion disposed at a lower position than the storage pocket. The leg shield portion may include an upper portion disposed at a higher position than the flasher opening, an intermediate portion disposed at a height between the upper end of the flasher opening and the lower end of the flasher opening, and a lower portion disposed at a lower position than the flasher opening. The lower portion of the inner panel may be disposed at a more inward position than the outer end of the storage pocket in the vehicle width direction. The lower portion of the leg shield portion may be connected to the lower portion of the inner panel.

According to this arrangement, the lower portion of the inner panel is disposed at a more inward position than the outer end of the storage pocket in the vehicle width direction. The lower portion of the leg shield portion is connected to the lower portion of the inner panel. The lower portion of the inner panel to which the lower portion of the leg shield portion is connected is thus disposed at a more inward position than the outer end of the storage pocket in the vehicle width direction, and therefore the length in the vehicle width direction of the lower portion of the leg shield portion can be increased. As a result, the rigidity of the side front cover can be heightened.

In one preferred embodiment of the present invention, a length in the up-down direction of the front flasher may be greater than a length in the vehicle width direction of the front flasher.

According to this arrangement, the front flasher is long in the up-down direction. In other words, the length in the up-down direction of the front flasher is greater than the length in the vehicle width direction of the front flasher. Therefore, if the areas are equal to each other when the vehicle is viewed frontally, the inner end of the front flasher can be made more apart from the headlight in the vehicle width direction than in a structure in which the front flasher is long in the vehicle width direction. Therefore, the discriminability of the front flasher can be heightened.

Additionally, the front cover portion and the leg shield portion are formed integrally with each other, and the rigidity of the side front cover is secured, and therefore the position at which the front flasher is disposed can be moved more outwardly. As a result, the discriminability of the front flasher can be made even higher. Additionally, although the range in which the width is narrowed in the outer edge portion of the front cover portion will become long in the up-down direction, and a portion in which the rigidity is reduced will spread in the up-down direction if the front flasher is long in the up-down direction, the discriminability of the front flasher can be heightened while restraining the rigidity of the outer edge portion of the front cover portion from being reduced because the front cover portion and the leg shield portion are formed integrally with each other as mentioned above.

In one preferred embodiment of the present invention, the central front cover may include a headlight cover at which at least a portion of the headlight is disposed and a lower cover disposed below the headlight cover and being structurally-independent of the headlight cover.

According to this arrangement, the central front cover is divided into a plurality of covers. In detail, the central front cover includes the headlight cover at which at least a portion of the headlight is disposed and the lower cover disposed below the headlight cover. The central front cover is thus divided into the plurality of covers, and therefore the degree of freedom in the shape of the central front cover is high. Additionally, the headlight cover and the lower cover are different members that are separate from each other, and therefore it is difficult for the vibrations of the lower cover to be transmitted to the headlight cover. At least a portion of the headlight is disposed at the headlight cover. Therefore, the vibrations of the headlight can be reduced. Additionally, the headlight whose weight is comparatively great vibrates during the traveling of the saddle type vehicle, and, in response to this, the headlight cover vibrates. The central front cover and the side front cover are different members that are separate from each other, and therefore the headlight cover and the side front cover are different members that are separate from each other. Therefore, it is difficult for the vibrations of the headlight and the vibrations of the headlight cover to be transmitted to the side front cover. Therefore, the vibrations of the side front cover and the vibrations of the front flasher can be reduced.

In one preferred embodiment of the present invention, the saddle type vehicle may additionally include a front fork attached to the head tube, a front wheel attached to the front fork, an inner cover disposed at a position more rearward than the front wheel and more forward than the inner panel and disposed between the pair of the side front covers in the vehicle width direction, and a protector disposed between the inner cover and the inner panel in the front-rear direction and disposed behind an air hole passing through the inner cover in the front-rear direction.

According to this arrangement, the protector is disposed behind the air hole passing through the inner cover in the front-rear direction. There is a possibility that water will scatter toward the saddle type vehicle while the saddle type vehicle is traveling on a wet road surface. Therefore, there is a possibility that water will infiltrate between the inner cover and the inner panel through the air hole. However, the protector is disposed behind the air hole, and therefore water that has infiltrated between the inner cover and the inner panel collides with the protector, and is guided downwardly toward the flat foot board. In other words, water is prevented from moving from in front of the protector to a position behind the protector. Therefore, the amount of water scattering toward the legs of the driver can be reduced.

In one preferred embodiment of the present invention, an upper edge of the protector may be disposed at a higher position than an upper edge of a front end portion of the flat foot board. A lower edge of the protector may be disposed at a lower position than the upper edge of the front end portion of the flat foot board.

According to this arrangement, the upper edge of the front end portion of the flat foot board is disposed at a lower position than the upper edge of the protector, and is disposed at a higher position than the lower edge of the protector. Therefore, the protector is disposed in front of a connection position between the lower end of the inner panel and the lower end of the leg shield portion, in front of a connection position between the lower end of the inner panel and the front end portion of the foot board, and in front of a connection position between the lower end of the leg shield portion and the front end portion of the foot board. The legs of the driver sitting on the seat are placed behind these connection positions. Therefore, there is a possibility that, if the protector is not provided, water that has infiltrated between the inner cover and the inner panel will move rearwardly through a gap among the inner panel, the leg shield portion, and the flat foot board, and hence the legs of the driver will be wetted therewith. Therefore, the amount of water scattering toward the legs of the driver can be reduced by providing the protector.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a left side view of a saddle type vehicle according to a preferred embodiment of the present invention.
FIG. 2 is a front view of the saddle type vehicle according to the preferred embodiment of the present invention.
FIG. 3 is a rear view of the saddle type vehicle according to the preferred embodiment of the present invention.
FIG. 4 is a left side view of the front of the saddle type vehicle.
FIG. 5 is a front view of the front of the saddle type vehicle.
FIG. 6 is a rear view of the front of the saddle type vehicle.
FIG. 7 is a schematic exploded perspective view showing a state in which a central front cover, a side front cover, and an inner panel have been disassembled.
FIG. 8 is a schematic exploded perspective view showing a state in which a headlight cover, a lower cover, and a headlight have been disassembled.
FIG. 9 is a view of the central front cover and the headlight seen from behind.
FIG. 10 is a schematic perspective view of an adjustment mechanism seen in the direction of arrow X of FIG. 9.
FIG. 11 is a left side view of a part of the saddle type vehicle showing the front of the saddle type vehicle.
FIG. 12A is a front view of the side front cover.
FIG. 12B is a left side view of the side front cover.
FIG. 12C is a rear view of the side front cover.
FIG. 13A is a left side view of the inner panel.
FIG. 13B is a rear view of the inner panel.
FIG. 14 is a view showing a cross section of the saddle type vehicle seen in the direction of arrow XIV of FIG. 11.
FIG. 15 is a view showing a cross section of the saddle type vehicle seen in the direction of arrow XV of FIG. 11.
FIG. 16 is a schematic perspective view of a protector disposed at the front of the saddle type vehicle seen obliquely from behind.
FIG. 17 is a view of the inner panel, a flat foot board, and the protector seen from behind.
FIG. 18 is a view of the saddle type vehicle that is frontally seen and in which a front wheel and a front fender are not shown.
FIG. 19 is a view showing a cross section of the saddle type vehicle seen in the direction of arrow XIX of FIG. 18.

### DETAILED DESCRIPTION OF THE PREFERRED EMBODIMENTS

Each of front, rear, upward, downward, leftward, and rightward directions in the following description is based on a basic posture equivalent to a state in which a saddle type vehicle 1 is traveling in a straight line on a horizontal plane, and is based on the point of view of a driver when the driver looks forwardly. The right-left direction is equivalent to a vehicle width direction. In the following description, the term "inward" denotes a direction that leads to the center WO in the width direction of the saddle type vehicle 1 (i.e., leads to a vertical plane that passes through the center line of a head tube 7 and that is perpendicular to the rotational axis of a rear wheel Wr), whereas the term "outward" denotes a direction away from the center WO in the width direction of the saddle type vehicle 1.

First, a structure of the whole of the saddle type vehicle 1 will be broadly described.

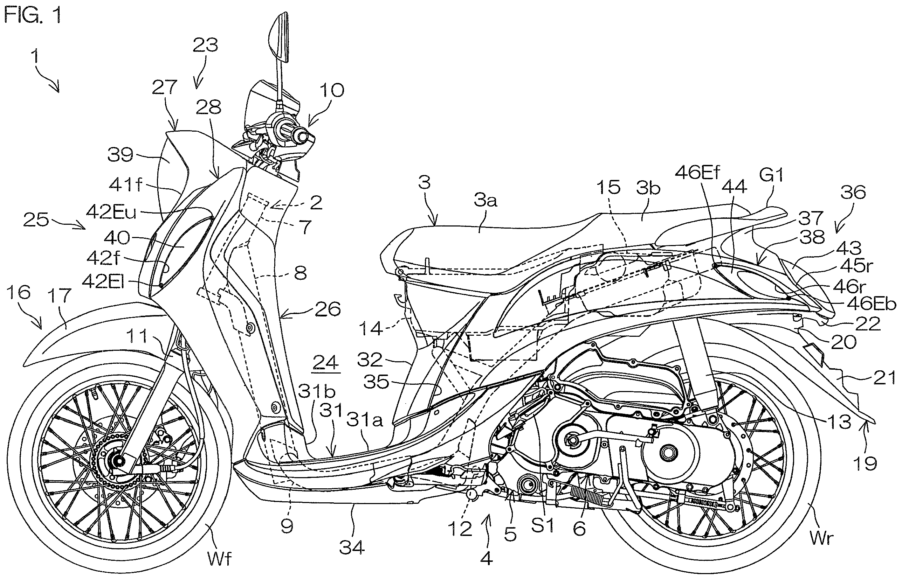

As shown in FIG. 1, the saddle type vehicle 1 includes a front wheel Wf and a rear wheel Wr, a vehicle body frame 2 that supports the front and rear wheels Wf and Wr, and a saddle type seat 3 disposed above the vehicle body frame 2. The saddle type vehicle 1 additionally includes a swing unit 4 supported by the vehicle body frame 2 swingably in the up-down direction. The swing unit 4 includes an engine (internal combustion engine) 5 that generates power by which the saddle type vehicle 1 travels and a driving mechanism 6 that transmits the power of the engine 5 to the rear wheel Wr.

As shown in FIG. 1, the vehicle body frame 2 includes a head tube 7 extending obliquely upwardly and rearwardly, a main frame 8 extending from the head tube 7 obliquely downwardly and rearwardly, and a pair of seat frames 9 extending from the main frame 8 obliquely upwardly and rearwardly. The vehicle body frame 2 additionally includes a cross member by which the pair of seat frames 9 are connected together. The pair of seat frames 9 extend in the front-rear direction, and are disposed apart from each other in the vehicle width direction. The head tube 7 is disposed at the center of the saddle type vehicle 1 in the vehicle width direction. The pair of seat frames 9 are disposed on the rightward side and the leftward side, respectively, with respect to the center WO in the width direction of the saddle type vehicle 1. The cross member extends from one of the pair of seat frames 9 to the other seat frame 9.

As shown in FIG. 1, the seat 3 is disposed above the pair of seat frames 9. The seat 3 is disposed behind the head tube 7. The seat 3 is supported by the pair of seat frames 9. The seat 3 extends in the front-rear direction. The seat 3 may be a single-person seat or a two-person seat. FIG. 1 shows an example in which a two-person seat that includes a driver seat 3a on which a driver sits and a tandem seat 3b on which a fellow passenger sits is used as the seat 3. The saddle type vehicle 1 includes a fold-up tandem step S1 on which the feet of the fellow passenger are put and a tandem grip G1 that is disposed on the rearward, rightward, and leftward sides with respect to the seat 3 and that is U-shaped when the vehicle is viewed planarly.

As shown in FIG. 1, the saddle type vehicle 1 includes a handle 10 that is operated by the driver and a front fork 11 that rotates rightwardly and leftwardly around the central axis of a steering shaft together with the handle 10 and the front wheel Wf.

As shown in FIG. 1, the front fork 11 rotatably supports the front wheel Wf. The front fork 11 is supported by the head tube 7. Therefore, the front wheel Wf is supported by the vehicle body frame 2 through the front fork 11. The front wheel Wf is disposed in front of the engine 5. The steering shaft equivalent to the upper portion of the front fork 11 is inserted in the head tube 7. The steering shaft is rotatable around the steering axis (i.e., the central axis of the steering shaft) with respect to the head tube 7. The handle 10 is attached to the front fork 11 above the head tube 7. The handle 10 is disposed in front of the seat 3 and above the seat 3. When the handle 10 is operated, the front wheel Wf and the front fork 11 rotate rightwardly and leftwardly together with the handle 10. As a result, the saddle type vehicle 1 is steered.

As shown in FIG. 1, the saddle type vehicle 1 includes a pivot shaft 12 by which the vehicle body frame 2 and the swing unit 4 are connected together so that the swing unit 4 can swing upwardly and downwardly with respect to the vehicle body frame 2 and a rear suspension 13 that absorbs vibrations of the vehicle body frame 2.

As shown in FIG. 1, the pivot shaft 12 is disposed below the seat 3 when the vehicle is viewed laterally. The pivot shaft 12 extends in the vehicle width direction. The pivot shaft 12 is attached to the vehicle body frame 2. The engine 5 is attached to the pivot shaft 12 in a posture in which the reciprocating direction of the piston (i.e., axial direction of the cylinder) extends in the front-rear direction when the vehicle is viewed planarly. The engine 5 is swingable in the up-down direction around the pivot axis (i.e., center line of the pivot shaft 12) with respect to the vehicle body frame 2. The driving mechanism 6 is connected to the engine 5, and swings around the pivot axis together with the engine 5. Therefore, the swing unit 4 is attached to the vehicle body frame 2 through the pivot shaft 12, and is swingable in the up-down direction around the pivot axis with respect to the vehicle body frame 2.

As shown in FIG. 1, the swing unit 4 extends rearwardly from the pivot shaft 12. The rear wheel Wr is rotatably supported by a rear end (i.e., portion of the driving mechanism 6) of the swing unit 4. Therefore, the rear wheel Wr is attached to the vehicle body frame 2 through the pivot shaft 12 and the swing unit 4. The rear wheel Wr is swingable in the up-down direction around the pivot axis together with the swing unit 4 with respect to the vehicle body frame 2. The rear wheel Wr is disposed below the pair of seat frames 9 when the vehicle is viewed laterally. Therefore, the rear wheel Wr is disposed below the seat 3. The engine 5 is disposed in front of the rear wheel Wr.

As shown in FIG. 1, the rear suspension 13 is disposed at a more rearward position than the pivot shaft 12. The rear suspension 13 is disposed below the seat 3. The rear suspension 13 inclines forwardly and rearwardly so that the upper end of the rear suspension 13 is located at a more forward position than the lower end of the rear suspension 13. The upper end of the rear suspension 13 is attached to the vehicle body frame 2. The lower end of the rear suspension 13 is attached to the rear end of the swing unit 4. The rear suspension 13 is extensible and contractible in the axial direction of the rear suspension 13. The amount of movement of the rear wheel Wr around the pivot axis is restricted by the rear suspension 13. Additionally, vibrations transmitted from the rear wheel Wr to the vehicle body frame 2 are absorbed by the rear suspension 13. As a result, the vibrations of the vehicle body frame 2 are reduced.

As shown in FIG. 1, the saddle type vehicle 1 includes a storage box 14 that is open upwardly and a fuel tank 15 that contains fuel to be supplied to the engine 5.

As shown in FIG. 1, the storage box 14 and the fuel tank 15 are disposed below the seat 3. Therefore, an opening defined by an upper end of the storage box 14 is closed by the seat 3. The opening of the storage box 14 is opened and closed by the seat 3. The storage box 14 and the fuel tank 15 are connected to the vehicle body frame 2, and are supported by the vehicle body frame 2. The pair of seat frames 9 are disposed on the rightward and leftward sides, respectively, with respect to the storage box 14. The storage box 14 is disposed in front of the fuel tank 15. The fuel tank 15 may be disposed at a more forward position than the storage box 14 without being disposed behind the storage box 14.

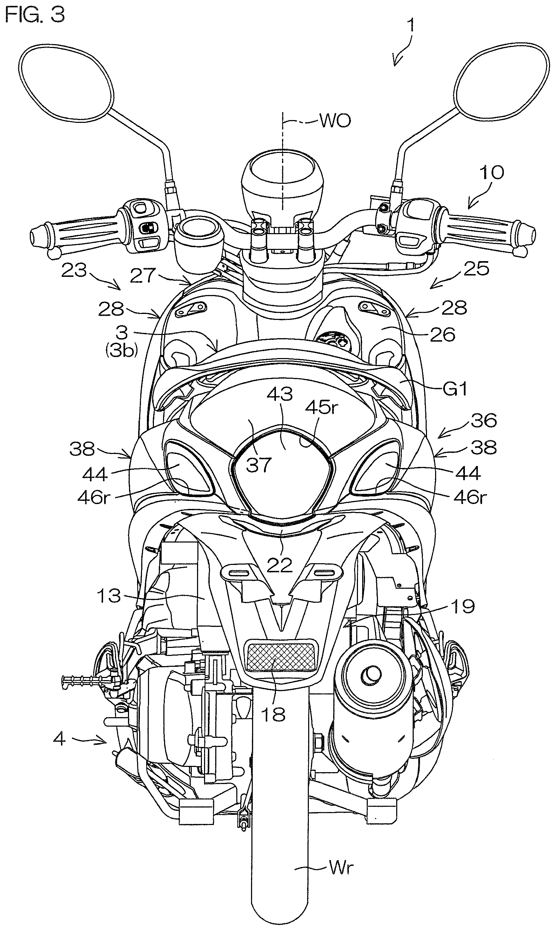

As shown in FIG. 1, the saddle type vehicle 1 includes a front fender 16 with which the front wheel Wf is covered, a rear fender 19 with which the rear wheel Wr is covered, and a vehicle body cover 23 with which the vehicle body frame 2 is covered. As shown in FIG. 3, the saddle type vehicle 1 additionally includes a reflex reflector 18 attached to the rear fender 19.

As shown in FIG. 1, the front fender 16 is disposed above the front wheel Wf. The handle 10 is disposed at a higher position than the front fender 16. The front fender 16 is attached to the front fork 11. The front fender 16 rotates around the steering axis rightwardly and leftwardly together with the front fork 11. The front fender 16 includes an upper fender portion 17 disposed above the front wheel Wf and a rear fender portion disposed behind the front wheel Wf.

As shown in FIG. 1, the rear fender 19 is disposed above and behind the rear wheel Wr. The rear fender 19 includes an upper fender portion 20 disposed above the rear wheel Wr and a rear fender portion 21 disposed at an obliquely upward and rearward position with respect to the rear wheel Wr. The rear fender 19 additionally includes a light supporting portion 22 disposed below a taillight 43 described later. The upper fender portion 20 is disposed between the seat 3 and the rear wheel Wr in the up-down direction, and is attached to the vehicle body frame 2. The upper fender portion 20 extends in the front-rear direction, and the rear fender portion 21 extends from the rear end of the upper fender portion 20 obliquely downwardly and rearwardly. The light supporting portion 22 extends rearwardly from the rear end of the upper fender portion 20 above the rear fender portion 21.

As shown in FIG. 1, a portion of the front fender 16 and a portion of the rear fender 19 are disposed inside the vehicle body cover 23. Likewise, the storage box 14 and the fuel tank 15 are disposed inside the vehicle body cover 23. The front fender 16 extends forwardly from the vehicle body cover 23 when the vehicle is viewed laterally, and the rear fender 19 extends from the vehicle body cover 23 obliquely downwardly and rearwardly when the vehicle is viewed laterally. The vehicle body cover 23 is supported by the vehicle body frame 2.

As shown in FIG. 1, the vehicle body cover 23 includes a concave portion 24 open upwardly, rightwardly, and leftwardly between the front wheel Wf and the engine 5 in the front-rear direction. The concave portion 24 extends in the vehicle width direction. The bottom of the concave portion 24 is disposed at a lower position than the seat 3. The bottom of the concave portion 24 is disposed between the front wheel Wf and the engine 5 in the front-rear direction. The feet and legs of the driver sitting on the seat 3 are placed in the concave portion 24. Therefore, the concave portion 24 defines a riding space in which the feet and legs of the driver sitting on the seat 3 are placed.

As shown in FIG. 1, the vehicle body cover 23 includes a front cover 25 disposed in front of the head tube 7 and an inner panel 26 disposed behind the head tube 7.

As shown in FIG. 1, the front cover 25 is disposed in front of the inner panel 26. The seat 3 is disposed behind the front cover 25 and the inner panel 26. The front cover 25 and the inner panel 26 are different members that are separate from each other. The front cover 25 extends rearward from the front(frontage) of the saddle type vehicle 1 to the lateral side of the inner panel 26 through the lateral side of head tube 7.The front cover 25 and the inner panel 26 define a portion of a riding space.

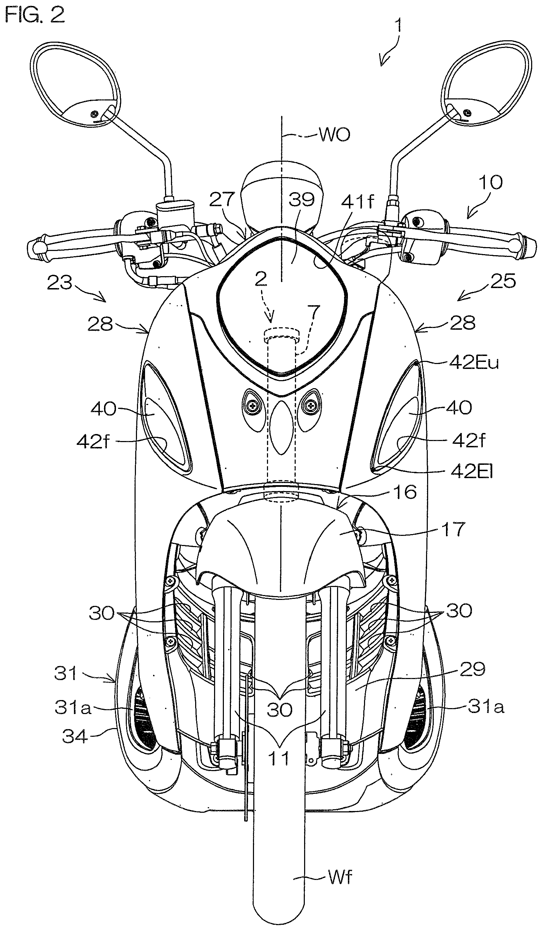

As shown in FIG. 2, the front cover 25 includes a central front cover 27 disposed in front of the head tube 7 and a pair of side front covers 28 disposed on the rightward and leftward sides, respectively, with respect to the central front cover 27.

As shown in FIG. 2, the central front cover 27 is disposed between the pair of side front covers 28 in the vehicle width direction. Likewise, the inner panel 26 is disposed between the pair of side front covers 28 in the vehicle width direction. The central front cover 27 and the side front cover 28 are different members that are separate from each other. As shown in FIG. 1, the side front cover 28 extends rearward from the front of the saddle type vehicle 1 to the lateral side of the inner panel 26 through the lateral side of head tube 7. The legs of the driver sitting on the seat 3 are placed behind the side front cover 28. A portion of the front fender 16 is disposed between the pair of side front covers 28 in the vehicle width direction, and extends forwardly from the pair of side front covers 28 when the vehicle is viewed laterally. A front end portion of the front fender 16 is disposed at a more forward position than the side front cover 28 and the central front cover 27.

As shown in FIG. 2, the vehicle body cover 23 includes an inner cover 29 disposed between the pair of side front covers 28 in the vehicle width direction.

As shown in FIG. 2, the inner cover 29 is disposed inside the front cover 25 and the inner panel 26. The inner cover 29 is disposed behind the front wheel Wf. Additionally, the inner cover 29 is disposed in front of the inner panel 26. Therefore, the inner cover 29 is disposed between the front wheel Wf and the inner panel 26 in the front-rear direction. The inner cover 29 has a plurality of air holes 30 through which the wind generated by the traveling of the saddle type vehicle 1 is guided to the engine 5.

As shown in FIG. 1, the vehicle body cover 23 includes a flat foot board 31 disposed above the seat frame 9, an undercover 34 disposed below the flat foot board 31, and a box cover 32 disposed in front of the storage box 14.

As shown in FIG. 1, the flat foot board 31 is disposed between the front wheel Wf and the engine 5 in the front-rear direction. A portion of the flat foot board 31 is disposed at a more forward position than the seat 3 and at a more rearward position than the head tube 7. The tandem step S1 is disposed behind the flat foot board 31 when the vehicle is viewed laterally. The box cover 32 is disposed above the flat foot board 31 when the vehicle is viewed laterally. The box cover 32 is disposed behind the front cover 25 and the inner panel 26. The flat foot board 31 and the box cover 32 are disposed at a lower position than the seat 3.

As shown in FIG. 1, the flat foot board 31 is disposed above the seat frame 9. The inner panel 26 and the side front cover 28 extend upwardly from the flat foot board 31 to a position higher than the seat 3. The box cover 32 extends upwardly from the flat foot board 31 to the seat 3. The undercover 34 is disposed below the flat foot board 31. The undercover 34 is disposed on the downward, rightward, and leftward sides with respect to the seat frame 9. The flat foot board 31 and the undercover 34 are different members that are separate from each other. The flat foot board 31 and the undercover 34 are attached to the seat frame 9.

As shown in FIG. 1, the flat foot board 31 includes a footrest portion 31a disposed at a lower position than the seat 3 and a front end portion 31b extending from the front end of the footrest portion 31a obliquely upwardly and forwardly. As shown in FIG. 2, the footrest portion 31a extends from the right end of the saddle type vehicle 1 to the left end of the saddle type vehicle 1. Therefore, the flat foot board 31 extends from the right end of the saddle type vehicle 1 to the left end of the saddle type vehicle 1. The feet of the driver sitting on the seat 3 are placed on the flat foot board 31. The upper surface of the flat foot board 31 may be a completely flat surface, or may be a substantially flat surface having such a degree of ruggedness as to enable the driver to place the feet thereon without difficulty (e.g., ruggedness of about 1 to 2 cm).

As shown in FIG. 1, the vehicle body cover 23 includes a rear cover 36 disposed on the upward, rightward, and leftward sides with respect to the pair of seat frames 9.

As shown in FIG. 1, the rear cover 36 is disposed at a more rearward position than the front cover 25 and the inner panel 26. A portion of the rear cover 36 is disposed between the seat 3 and the rear wheel Wr in the up-down direction when the vehicle is viewed laterally. The rear cover 36 extends rearwardly from the flat foot board 31 and the box cover 32 when the vehicle is viewed laterally. The flat foot board 31, the box cover 32, and the undercover 34 define a V groove 35 that is V-shaped when the vehicle is viewed laterally and that is open obliquely upwardly and rearwardly. A portion of the rear cover 36 is disposed inside the V groove 35.

As shown in FIG. 3, the rear cover 36 includes a central rear cover 37 disposed above the rear wheel Wr when the vehicle is viewed from behind and a pair of side rear covers 38 disposed on the rightward and leftward sides, respectively, with respect to the central rear cover 37.

As shown in FIG. 1, the central rear cover 37 is disposed above the rear fender 19. The central rear cover 37 is disposed behind the seat 3. The pair of side rear covers 38 are disposed on the rightward and leftward sides, respectively, with respect to the pair of seat frames 9. The storage box 14 and the fuel tank 15 are disposed between the pair of side rear covers 38 in the vehicle width direction. The upper fender portion 20 of the rear fender 19 is disposed between the pair of side rear covers 38 in the vehicle width direction, and the rear fender portion 21 of the rear fender 19 is disposed below the pair of side rear covers 38 when the vehicle is viewed laterally. The central rear cover 37 and the side rear cover 38 are different members that are separate from each other. The central rear cover 37 and the side rear cover 38 are attached to the vehicle body frame 2.

As shown in FIG. 2, the saddle type vehicle 1 includes a headlight 39 that emits light forwardly from the saddle type vehicle 1 and a pair of front flashers 40 that blink when the saddle type vehicle 1 turns right or left.

As shown in FIG. 2, a portion of the headlight 39 and a portion of the front flasher 40 are disposed inside the front cover 25. A lens of the headlight 39 through which light passes is exposed from a headlight opening 41 f open at the outer surface of the front cover 25, and a lens of the front flasher 40 through which light passes is exposed from a flasher opening 42f open at the outer surface of the front cover 25. The flasher opening 42f is disposed at a more outward position than the headlight opening 41f. The upper end of the headlight opening 41f is disposed at a higher position than the pair of flasher openings 42f. The headlight opening 41f is disposed above the front wheel Wf and the front fender 16 when the vehicle is viewed frontally. The flasher opening 42f is disposed at a more outward position than the front wheel Wf and the front fender 16 when the vehicle is viewed frontally.

As shown in FIG. 2, the length in the vehicle width direction (i.e., width) of the headlight opening 41f is longer than the length in the vehicle width direction of the front wheel Wf. Additionally, the length in the vehicle width direction of the headlight opening 41f is longer than the length in the vehicle width direction of the flasher opening 42f. The length in the up-down direction (i.e., height) of the flasher opening 42f is longer than the length in the vehicle width direction of the flasher opening 42f. Therefore, the flasher opening 42f is long in the up-down direction. A lower end 42E1 of the flasher opening 42f is disposed at a more inward position than an upper end 42Eu of the flasher opening 42f. The lower end 42E1 of the flasher opening 42f equivalent to an inner end is disposed at a more outward position than the front fender 16.

As shown in FIG. 1, the headlight opening 41f and the flasher opening 42f are disposed at a more forward position than the handle 10 and the inner panel 26. The flasher opening 42f is disposed at a lower position than the handle 10. The flasher opening 42f is disposed at a more forward position than the handle 10. The headlight opening 41f and the flasher opening 42f are disposed above the front wheel Wf and the front fender 16 when the vehicle is viewed laterally. The upper end 42Eu of the flasher opening 42f is disposed at a more rearward position than the headlight opening 41f when the vehicle is viewed laterally. The lower end 42E1 of the flasher opening 42f is disposed below the headlight opening 41f when the vehicle is viewed laterally. A portion of the flasher opening 42f is disposed at the same height as the seat 3.

As shown in FIG. 3, the saddle type vehicle 1 includes a taillight 43 that emits light rearwardly from the saddle type vehicle 1 and a pair of rear flashers 44 that blink when the saddle type vehicle 1 turns right or left.

As shown in FIG. 3, a portion of the taillight 43 and a portion of the rear flasher 44 are disposed inside the rear cover 36. A lens of the taillight 43 through which light passes is exposed from a light opening 45r open at the outer surface of the rear cover 36, and a lens of the rear flasher 44 through which light passes is exposed from the flasher opening 46r open at the outer surface of the rear cover 36. The light opening 45r is disposed between the two flasher openings 46r in the vehicle width direction. The upper end of the light opening 45r is disposed at a higher position than the two flasher openings 46r. The lower end of the light opening 45r is disposed at a lower position than the two flasher openings 46r. The light opening 45r is disposed above the rear wheel Wr and the rear fender 19 when the vehicle is viewed from behind. The two flasher openings 46r are disposed at a more outward position than the rear wheel Wr when the vehicle is viewed from behind.

As shown in FIG. 3, the length in the vehicle width direction of the light opening 45r is longer than the length in the vehicle width direction of the rear wheel Wr. Additionally, the length in the vehicle width direction of the light opening 45r is longer than the length in the vehicle width direction of the flasher opening 46r. As shown in FIG. 1, the length in the up-down direction of the flasher opening 46r is shorter than the length in the front-rear direction of the flasher opening 46r. Therefore, the flasher opening 46r is long in the front-rear direction. The front end 46Ef of the flasher opening 46r is disposed at a higher position than the rear end 46Eb of the flasher opening 46r. Additionally, the front end 46Ef of the flasher opening 46r is disposed at a more forward position than the light opening 45r. The rear end 46Eb of the flasher opening 46r is disposed at a more rearward position than the front end of the light opening 45r. The flasher opening 46r is disposed in front of the light opening 45r when the vehicle is viewed laterally.

As shown in FIG. 1, the taillight 43 is disposed behind the rear flasher 44 when the vehicle is viewed laterally. The light opening 45r and the flasher opening 46r are disposed at a more rearward position than the engine 5. The light opening 45r and the flasher opening 46r are disposed at a lower position than the handle 10. The light opening 45r and the flasher opening 46r are disposed at a lower position than the headlight 39. The upper end 42Eu of the flasher opening 42f is disposed at a higher position than the light opening 45r and the flasher opening 46r when the vehicle is viewed laterally.

Next, a structure of the front of the saddle type vehicle 1 will be described in detail.

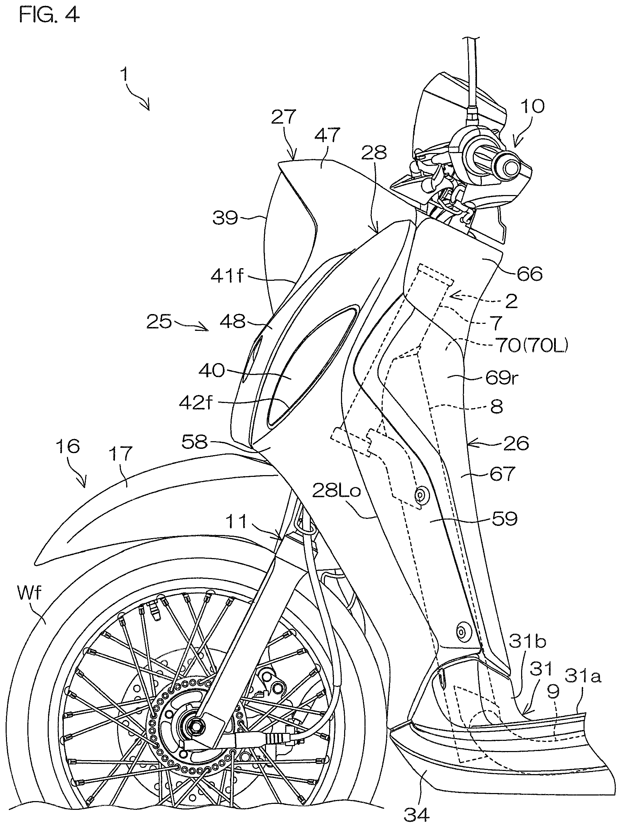

As shown in FIG. 4 to FIG. 6, the saddle type vehicle 1 includes the front cover 25 disposed in front of the head tube 7 and the inner panel 26 disposed behind the head tube 7.

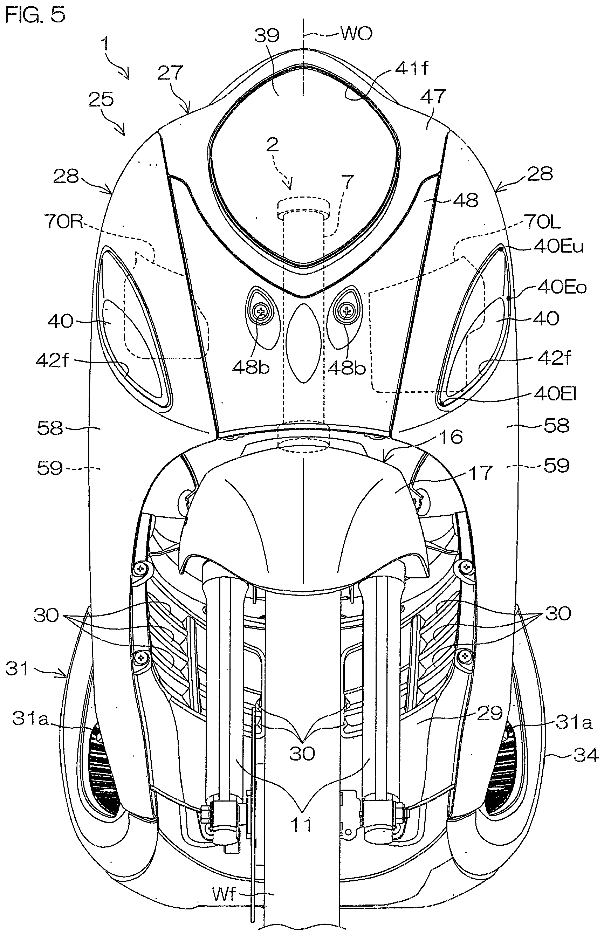

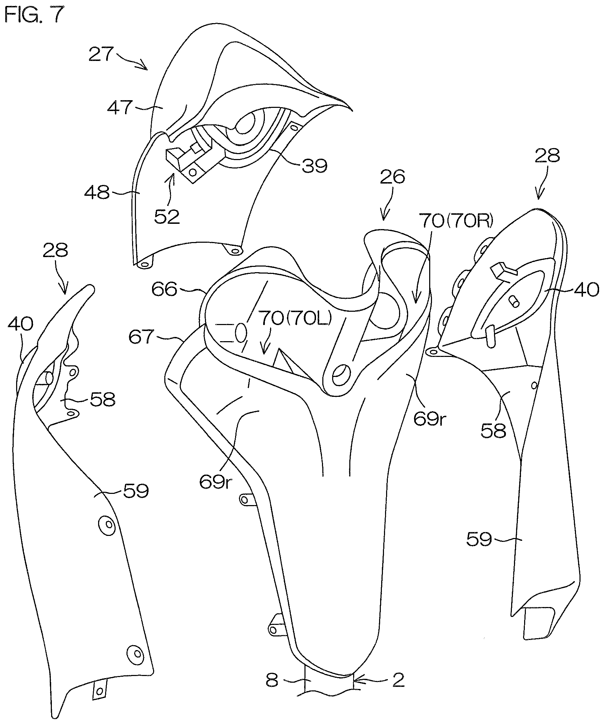

As shown in FIG. 5, the front cover 25 includes the central front cover 27 to which the headlight 39 is attached and the left-and-right pair of side front covers 28 to which the front flasher 40 is attached. As shown in FIG. 7, the central front cover 27, the side front cover 28, and the inner panel 26 are different members that are separate from each other.

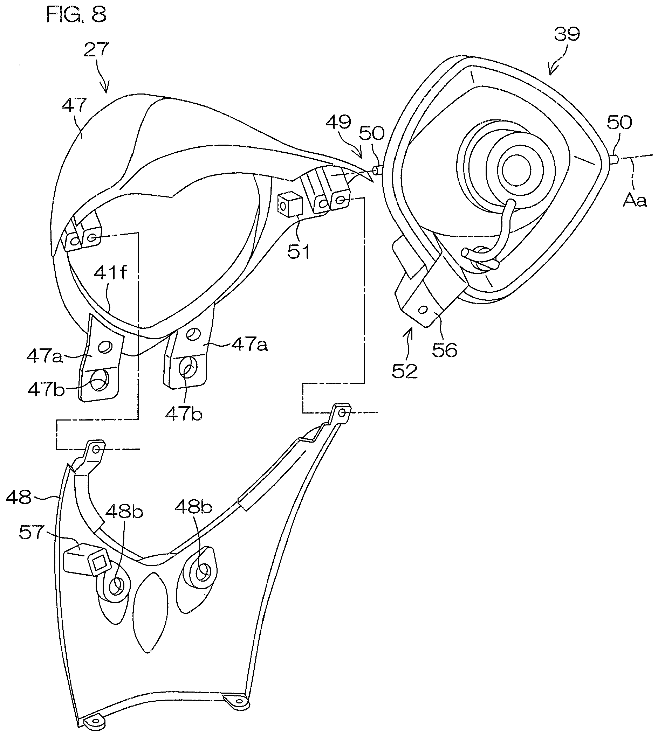

As shown in FIG. 8, the central front cover 27 includes a headlight cover 47 to which the headlight 39 is attached and a lower cover 48 disposed below the headlight cover 47.

As shown in FIG. 8, the headlight cover 47 and the lower cover 48 are different members that are separate from each other. The headlight opening 41f is disposed at the headlight cover 47. The headlight cover 47 includes a left-and-right pair of ribs 47a attached to the head tube 7 through a stay. The pair of ribs 47a are disposed below the headlight opening 41 f, and extend in the up-down direction. Each rib 47a has a mounting hole 47b passing through the rib 47a in the front-rear direction. Likewise, the lower cover 48 has a mounting hole 48b passing through the lower cover 48 in the front-rear direction. The headlight cover 47 and the lower cover 48 are combined together in such a way as to allow the mounting holes 47b and 48b to overlap with each other in the front-rear direction, and are connected to the stay fixed to the head tube 7 by a pair of screws that are inserted into the mounting holes 47b and 48b from the front side (see FIG. 5). As a result, the headlight 39, the headlight cover 47, and the lower cover 48 are supported by the vehicle body frame 2.

As shown in FIG. 8, the saddle type vehicle 1 includes a supporting mechanism 49 that connects the central front cover 27 and the headlight 39 together so that the headlight 39 is rotatable with respect to the central front cover 27.

As shown in FIG. 8, the supporting mechanism 49 includes a pair of rotational shafts 50 that extend in the vehicle width direction along an aiming axis Aa and a pair of supporting portions 51 that support the rotational shafts 50 so that the rotational shaft 50 is rotatable around the center line of the rotational shaft 50. The rotational shafts 50 are provided in one of the headlight cover 47 and the headlight 39, and the supporting portions 51 are provided in the other one of the headlight cover 47 and the headlight 39. FIG. 8 shows an example in which the rotational shafts 50 are provided in the headlight 39, and the supporting portions 51 are provided in the headlight cover 47.

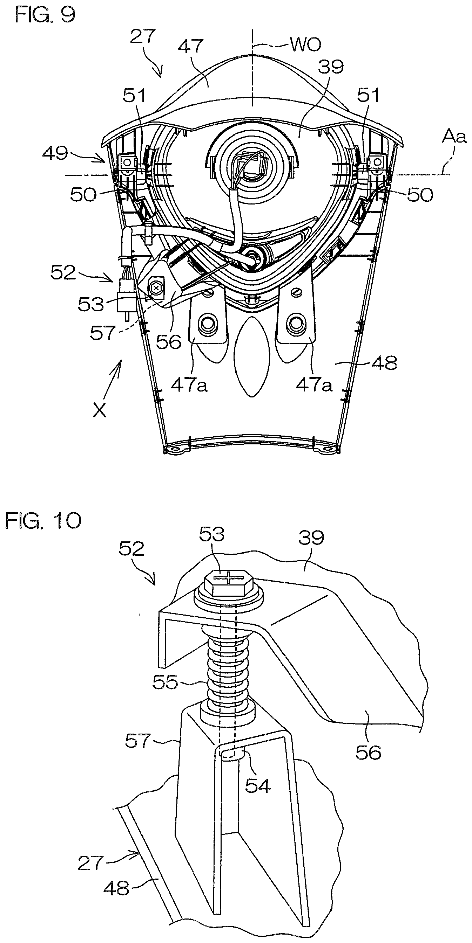

As shown in FIG. 9, the saddle type vehicle 1 additionally includes an adjustment mechanism 52 that adjusts the position of the headlight 39 around the aiming axis Aa with respect to the central front cover 27.

As shown in FIG. 10, the adjustment mechanism 52 includes an adjusting screw 53 inserted in the headlight 39 and in the lower cover 48, an adjusting nut 54 attached to a shank of the adjusting screw 53, and an adjusting spring 55 disposed between a head of the adjusting screw 53 and the adjusting nut 54. The shank of the adjusting screw 53 passes through a flange portion 56 disposed at the headlight 39 and a base portion 57 disposed at the lower cover 48. As shown in FIG. 9, the flange portion 56 is disposed behind the base portion 57, and the head of the adjusting screw 53 is disposed behind the flange portion 56. The adjusting spring 55 is disposed between the flange portion 56 and the base portion 57, and the adjusting nut 54 is disposed in front of the base portion 57.

As shown in FIG. 10, the movement of the flange portion 56 and that of the base portion 57 in a direction in which these portions recede from each other in the axial direction of the adjusting screw 53 are restricted by the head of the adjusting screw 53 and the adjusting nut 54. Additionally, the movement of the flange portion 56 and that of the base portion 57 in a direction in which these portions proceed to each other in the axial direction of the adjusting screw 53 are restricted by the adjusting spring 55. As a result, the headlight 39 is held at a predetermined position with respect to the headlight cover 47 and the lower cover 48. An interval between the head of the adjusting screw 53 and the adjusting nut 54 increases or decreases when a user rotates the adjusting screw 53 by use of a tool. As a result, the headlight 39 rotates around the aiming axis Aa with respect to the headlight cover 47 and the lower cover 48, and the angle of light emitted forwardly from the headlight 39 is adjusted.

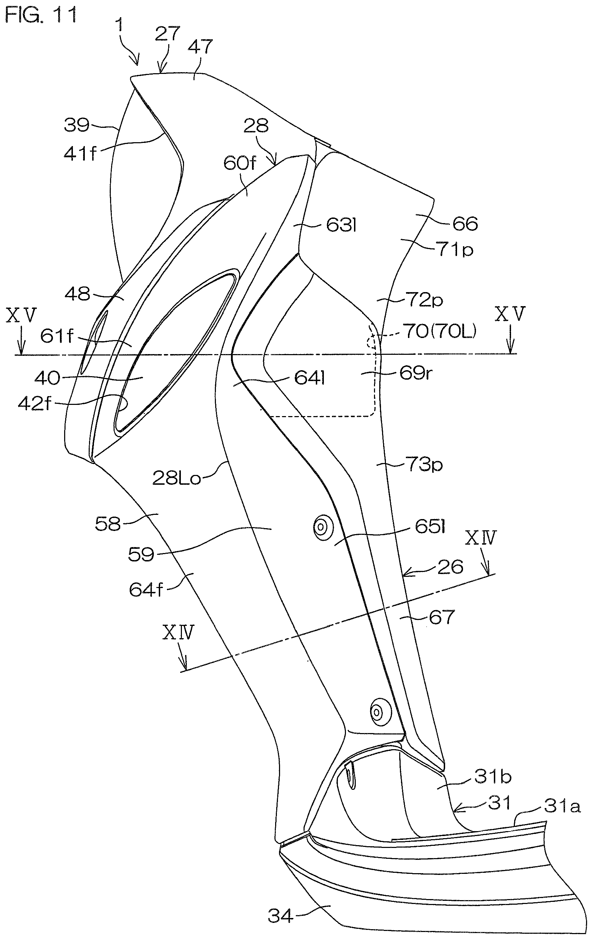

As shown in FIG. 11, the side front cover 28 includes a front cover portion 58 disposed on the outward side of the central front cover 27 and a leg shield portion 59 disposed on the outward side of the inner panel 26.

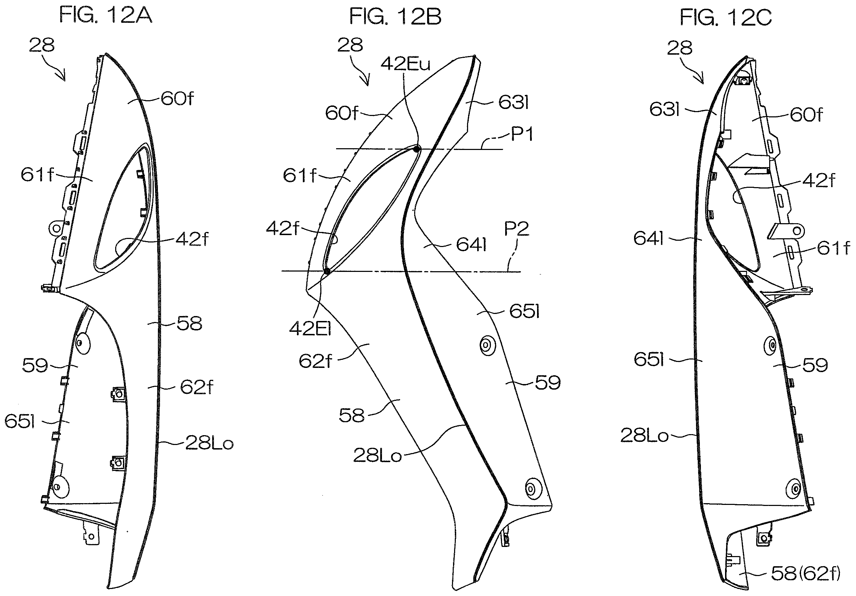

As shown in FIG. 11, the front cover portion 58 is disposed in front of the leg shield portion 59. The leg shield portion 59 is disposed at a more forward position than the seat 3. The legs of the driver sitting on the seat 3 are placed behind the leg shield portion 59. The front cover portion 58 and the leg shield portion 59 extend upwardly from the flat foot board 31. As shown in FIG. 12A, FIG. 12B, and FIG. 12C, the front cover portion 58 and the leg shield portion 59 are formed integrally with each other. As can be understood from a combination of FIGS. 11, 12A, 12B, and 12C, an integrally-formed portion between the front cover portion 58 and the leg shield portion 59 (i.e., part shown by the heavy line in FIGS. 12A, 12B, and 12C) extends from the flat foot board 31 to a position higher than the front flasher 40.

As shown in FIG. 12A, FIG. 12B, and FIG. 12C, the front cover portion 58 and the leg shield portion 59 are joined together by their outer edges. In other words, the outer edge of the front cover portion 58 and the outer edge of the leg shield portion 59 overlap with each other. Additionally, the outer edge of the front cover portion 58 and the outer edge of the leg shield portion 59 overlap with an outer edge 28Lo of the side front cover 28. In FIGS. 12A, 12B, and 12C, the outer edge 28Lo of the side front cover 28 is shown by the heavy line. The outer edge 28Lo of the side front cover 28 is a line by which a part positioned on the outermost side when the side front cover 28 is seen from behind is tied.

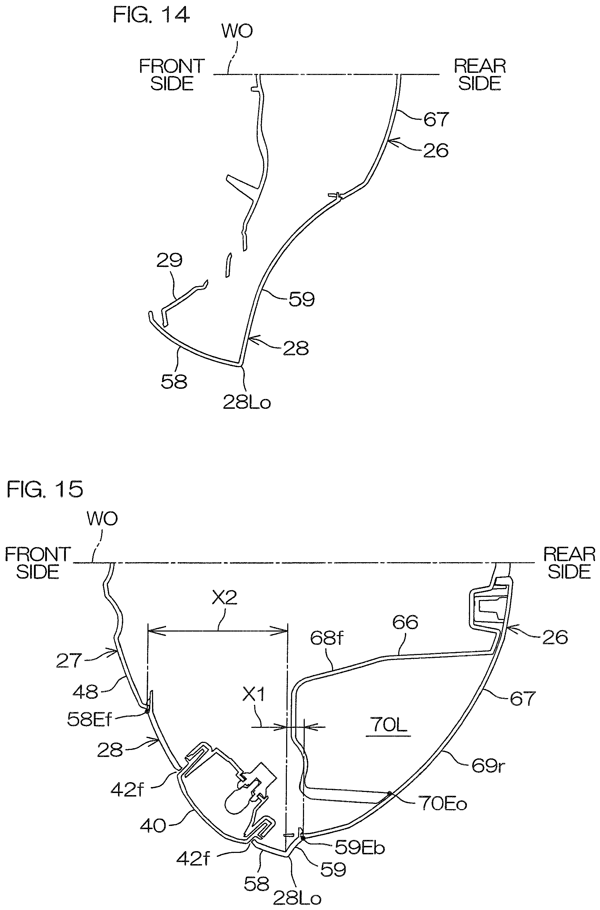

As shown in FIG. 14, the integrally-formed portion of both the front cover portion 58 and the leg shield portion 59 has a V-shaped transverse section (i.e., a cross section obtained by being cut by a horizontal plane) that is open inwardly. The front cover portion 58 extends from the outer edge 28Lo of the side front cover 28 obliquely forwardly and inwardly. The leg shield portion 59 extends from the outer edge 28Lo of the side front cover 28 obliquely rearwardly and inwardly. As shown in FIG. 15, the flasher opening 42f is disposed at the front cover portion 58. Therefore, the front flasher 40 is attached to the front cover portion 58. The front cover portion 58 extends from the front flasher 40 rearwardly and outwardly. The leg shield portion 59 extends rearwardly and inwardly from the outer edge of the front cover portion 58 toward a left storage pocket 70L described later.

As shown in FIG. 12B, the front cover portion 58 includes an upper portion 60f disposed at a higher position than the flasher opening 42f, an intermediate portion 61f disposed at a height between the upper end 42Eu of the flasher opening 42f and the lower end 42E1 of the flasher opening 42f, and a lower portion 62f disposed at a lower position than the flasher opening 42f. The upper portion 60f of the front cover portion 58 is a portion positionally-higher than a horizontal plane P1 that passes through the upper end 42Eu of the flasher opening 42f, whereas the lower portion 62f is a portion positionally-lower than a horizontal plane P2 that passes through the lower end 42E1 of the flasher opening 42f.

As shown in FIG. 12B, the length in the front-rear direction of the upper end of the upper portion 60f of the front cover portion 58 when the vehicle is viewed laterally is smaller than the length in the front-rear direction of the lower end of the upper portion 60f of the front cover portion 58 when the vehicle is viewed laterally. The length in the front-rear direction of the upper end of the intermediate portion 61 f of the front cover portion 58 when the vehicle is viewed laterally is smaller than the length in the front-rear direction of the lower end of the intermediate portion 61f of the front cover portion 58 when the vehicle is viewed laterally. The length in the front-rear direction of the upper end of the lower portion 62f of the front cover portion 58 when the vehicle is viewed laterally is greater than the length in the front-rear direction of the lower end of the lower portion 62f of the front cover portion 58 when the vehicle is viewed laterally.

As shown in FIG. 12B, the maximum value of the length in the front-rear direction of the intermediate portion 61 f of the front cover portion 58 when the vehicle is viewed laterally is greater than the minimum value of the length in the front-rear direction of the upper portion 60f of the front cover portion 58 when the vehicle is viewed laterally, and is greater than the minimum value of the length in the front-rear direction of the lower portion 62f of the front cover portion 58 when the vehicle is viewed laterally. Additionally, the maximum value of the length in the up-down direction of the upper portion 60f of the front cover portion 58 when the vehicle is viewed laterally is smaller than the maximum value of the length in the up-down direction of the intermediate portion 61f of the front cover portion 58 when the vehicle is viewed laterally, and is smaller than the maximum value of the length in the up-down direction of the lower portion 62f of the front cover portion 58 when the vehicle is viewed laterally. The maximum value of the length in the up-down direction of the intermediate portion 61f of the front cover portion 58 when the vehicle is viewed laterally is smaller than the maximum value of the length in the up-down direction of the lower portion 62f of the front cover portion 58 when the vehicle is viewed laterally.

As shown in FIG. 12B, the leg shield portion 59 includes an upper portion 631 disposed at a higher position than the flasher opening 42f, an intermediate portion 641 disposed at a height between the upper end 42Eu of the flasher opening 42f and the lower end 42E1 of the flasher opening 42f, and a lower portion 651 disposed at a lower position than the flasher opening 42f. The upper portion 631 of the leg shield portion 59 is a portion positionally-higher than the horizontal plane P1, whereas the lower portion 651 of the leg shield portion 59 is a portion positionally-lower than the horizontal plane P2.

As shown in FIG. 12B, the length in the front-rear direction of the upper end of the upper portion 631 of the leg shield portion 59 when the vehicle is viewed laterally is smaller than the length in the front-rear direction of the lower end of the upper portion 631 of the leg shield portion 59 when the vehicle is viewed laterally. The length in the front-rear direction of the upper end of the intermediate portion 641 of the leg shield portion 59 when the vehicle is viewed laterally is smaller than the length in the front-rear direction of the lower end of the intermediate portion 641 of the leg shield portion 59 when the vehicle is viewed laterally. The length in the front-rear direction of the upper end of the lower portion 651 of the leg shield portion 59 when the vehicle is viewed laterally is greater than the length in the front-rear direction of the lower end of the lower portion 651 of the leg shield portion 59 when the vehicle is viewed laterally.

As shown in FIG. 12B, the rear edge of the intermediate portion 641 of the leg shield portion 59 has the shape of the letter V that is open rearwardly when the vehicle is viewed laterally, and the length in the front-rear direction of the intermediate portion 641 of the leg shield portion 59 when the vehicle is viewed laterally is the smallest at a lower position than the upper end of the intermediate portion 641 and at a higher position than the lower end of the intermediate portion 641. The minimum value of the length in the front-rear direction of the intermediate portion 641 of the leg shield portion 59 when the vehicle is viewed laterally is smaller than the maximum value of the length in the front-rear direction of the upper portion 631 of the leg shield portion 59 when the vehicle is viewed laterally, and is smaller than the maximum value of the length in the front-rear direction of the lower portion 651 of the leg shield portion 59 when the vehicle is viewed laterally. The maximum value of the length in the front-rear direction of the lower portion 651 of the leg shield portion 59 when the vehicle is viewed laterally is greater than the maximum value of the length in the front-rear direction of the upper portion 631 of the leg shield portion 59 when the vehicle is viewed laterally. The maximum value of the length in the front-rear direction of the intermediate portion 641 of the leg shield portion 59 when the vehicle is viewed laterally is smaller than the maximum value of the length in the front-rear direction of the intermediate portion 61f of the front cover portion 58 when the vehicle is viewed laterally.

Additionally, as shown in FIG. 12B, the maximum value of the length in the up-down direction of the upper portion 631 of the leg shield portion 59 when the vehicle is viewed laterally is smaller than the maximum value of the length in the up-down direction of the intermediate portion 641 of the leg shield portion 59 when the vehicle is viewed laterally, and is smaller than the maximum value of the length in the up-down direction of the lower portion 651 of the leg shield portion 59 when the vehicle is viewed laterally. The maximum value of the length in the up-down direction of the intermediate portion 641 of the leg shield portion 59 when the vehicle is viewed laterally is smaller than the maximum value of the length in the up-down direction of the lower portion 651 of the leg shield portion 59 when the vehicle is viewed laterally. The maximum value of the length in the up-down direction of the lower portion 651 of the leg shield portion 59 when the vehicle is viewed laterally is smaller than the maximum value of the length in the up-down direction of the lower portion 62f of the front cover portion 58 when the vehicle is viewed laterally.

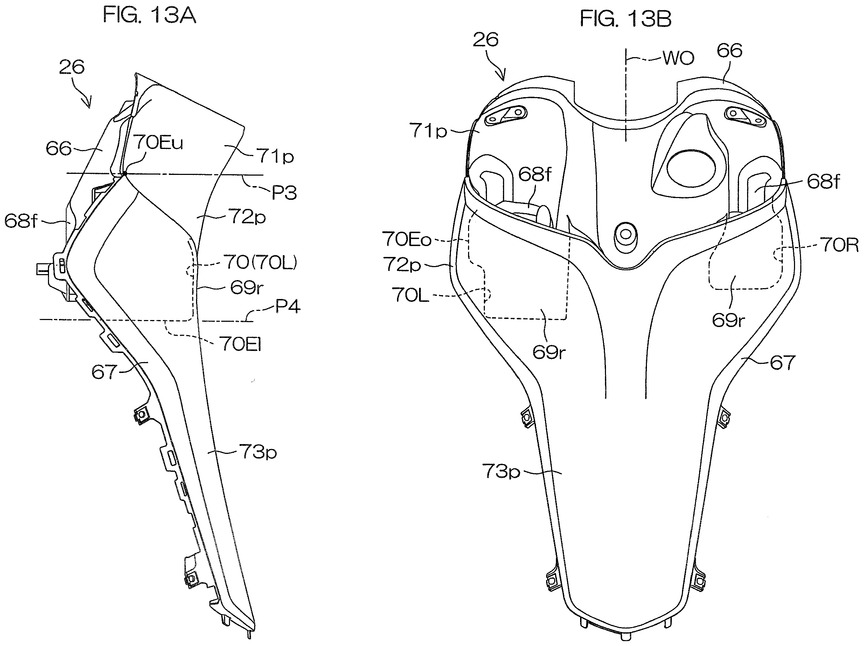

As shown in FIG. 13A and FIG. 13B, the inner panel 26 includes a front panel 66 disposed behind the head tube 7 and a rear panel 67 disposed behind the front panel 66.

As shown in FIG. 13A and FIG. 13B, the upper edge of the front panel 66 is disposed at a higher position than the rear panel 67. The lower edge of the rear panel 67 is disposed at a lower position than the front panel 66. As shown in FIG. 11, the rear panel 67 extends upwardly from the flat foot board 31 toward the front panel 66. The upper portion of the rear panel 67 is disposed behind the lower portion of the front panel 66. As shown in FIG. 15, the front panel 66 and the rear panel 67 are different members that are separate from each other. The rear panel 67 is attached to the front panel 66, and the front panel 66 is attached to the vehicle body frame 2.

As shown in FIG. 15, the inner panel 26 includes a pocket forming portion 68f disposed at the front panel 66 and a pocket forming portion 69r disposed at the rear panel 67.

As shown in FIG. 15, the pocket forming portion 68f has a concave cross section that is open rearwardly, and the pocket forming portion 69r has a circular-arc cross section that is convex rearwardly. The pocket forming portion 69r is disposed behind the opening of the pocket forming portion 68f. The pocket forming portion 68f is disposed on the outward side of the center WO in the width direction. The outer end of the pocket forming portion 68f is disposed at a more inward position than the outer end of the pocket forming portion 69r. The front end of the pocket forming portion 68f faces the pocket forming portion 69r with an interval therebetween in the front-rear direction. The pocket forming portion 68f and the pocket forming portion 69r form a left storage pocket 70L described later. The outer end 70Eo of the left storage pocket 70L is disposed at a more inward position than the outer end of the flasher opening 42f in the vehicle width direction and at a more outward position than the inner end of the flasher opening 42f in the vehicle width direction.

As shown in FIG. 13B, the inner panel 26 defines one or more storage pockets 70 that are open upwardly. FIG. 13B shows an example in which the inner panel 26 forms a left-and-right pair of storage pockets 70 (i.e., a right storage pocket 70R and a left storage pocket 70L).

As shown in FIG. 13A and FIG. 13B, each storage pocket 70 is defined by the rear surface of the front panel 66 and the front surface of the rear panel 67. A space between the front panel 66 and the rear panel 67 in the front-rear direction is equivalent to a storage space of each storage pocket 70. The inner surface of each storage pocket 70 includes the rear surface of the front panel 66 and the front surface of the rear panel 67. Each storage pocket 70 extends downwardly from the opening of the storage pocket 70. The opening of the right storage pocket 70R and the opening of the left storage pocket 70L are disposed on the rightward and leftward sides, respectively, with respect to the center WO in the width direction. The bottom of the right storage pocket 70R is disposed at a higher position than the bottom of the left storage pocket 70L. As shown in FIG. 11, the opening of each storage pocket 70 is disposed behind the front flasher 40 when the vehicle is viewed laterally. The opening of each storage pocket 70 is disposed below the handle 10 when the vehicle is viewed laterally. As shown in FIG. 5, a part of the storage pocket 70 overlaps with the front flasher 40 when the vehicle is viewed frontally.

As shown in FIG. 13A, the inner panel 26 includes an upper portion 71p disposed at a higher position than the left storage pocket 70L, an intermediate portion 72p disposed at a height between the upper end 70Eu of the left storage pocket 70L and the lower end 70E1 of the left storage pocket 70L, and a lower portion 73p disposed at a lower position than the left storage pocket 70L. The upper portion 71p of the inner panel 26 is a portion positionally-higher than a horizontal plane P3 that passes through the upper end 70Eu of the left storage pocket 70L, whereas the lower portion 73p of the inner panel 26 is a portion positionally-lower than a horizontal plane P4 that passes through the lower end 70E1 of the left storage pocket 70L.

As shown in FIG. 13A, the length in the front-rear direction of the upper end of the upper portion 71p of the inner panel 26 when the vehicle is viewed laterally is smaller than the length in the front-rear direction of the lower end of the upper portion 71p of the inner panel 26 when the vehicle is viewed laterally. The length in the front-rear direction of the upper end of the intermediate portion 72p of the inner panel 26 is greater than the length in the front-rear direction of the lower end of the intermediate portion 72p of the inner panel 26. The length in the front-rear direction of the upper end of the lower portion 73p of the inner panel 26 when the vehicle is viewed laterally is greater than the length in the front-rear direction of the lower end of the lower portion 73p of the inner panel 26 when the vehicle is viewed laterally.

As shown in FIG. 13A, the maximum value of the length in the front-rear direction of the upper portion 71p of the inner panel 26 when the vehicle is viewed laterally is greater than the maximum value of the length in the front-rear direction of the lower portion 73p of the inner panel 26 when the vehicle is viewed laterally. The maximum value of the length in the up-down direction of the upper portion 71p of the inner panel 26 when the vehicle is viewed laterally is smaller than the maximum value of the length in the up-down direction of the intermediate portion 72p of the inner panel 26 when the vehicle is viewed laterally, and is smaller than the maximum value of the length in the up-down direction of the lower portion 73p of the inner panel 26 when the vehicle is viewed laterally. The maximum value of the length in the up-down direction of the intermediate portion 72p of the inner panel 26 when the vehicle is viewed laterally is smaller than the maximum value of the length in the up-down direction of the lower portion 73p of the inner panel 26 when the vehicle is viewed laterally.

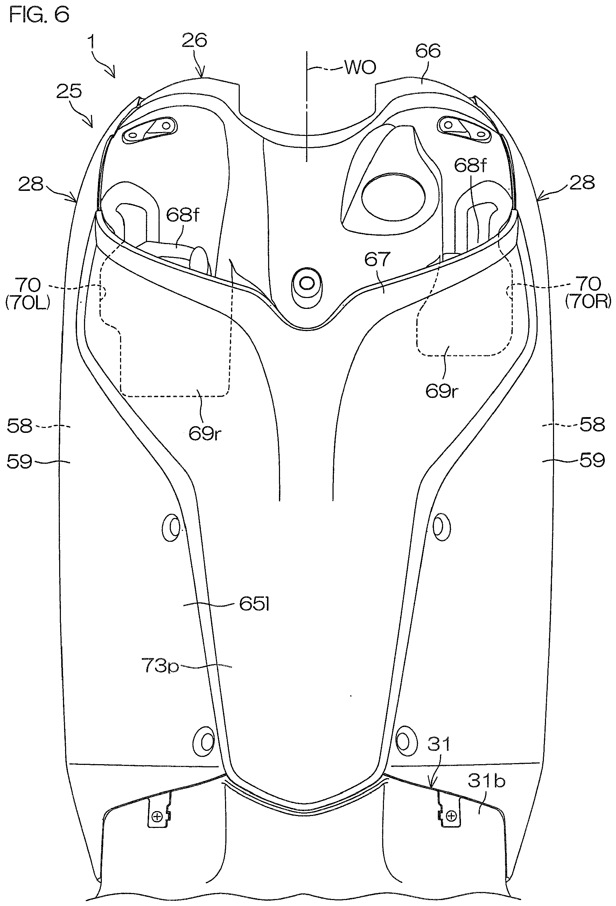

As shown in FIG. 13B, the length in the vehicle width direction of the upper end of the lower portion 73p of the inner panel 26 is greater than the length in the vehicle width direction of the lower end of the lower portion 73p of the inner panel 26. The length in the vehicle width direction of the lower portion 73p of the inner panel 26 is the smallest at the lower end of the lower portion 73p. The minimum value of the length in the vehicle width direction of the lower portion 73p of the inner panel 26 is smaller than the maximum value of the length in the vehicle width direction of the upper portion 71p of the inner panel 26, and is smaller than the maximum value of the length in the vehicle width direction of the intermediate portion 72p of the inner panel 26. The lower portion 73p of the inner panel 26 is disposed at a more inward position than the outer end 70Eo of the left storage pocket 70L in the vehicle width direction. As shown in FIG. 6, the lower portion 651 of the leg shield portion 59 is connected to the lower portion 73p of the inner panel 26.

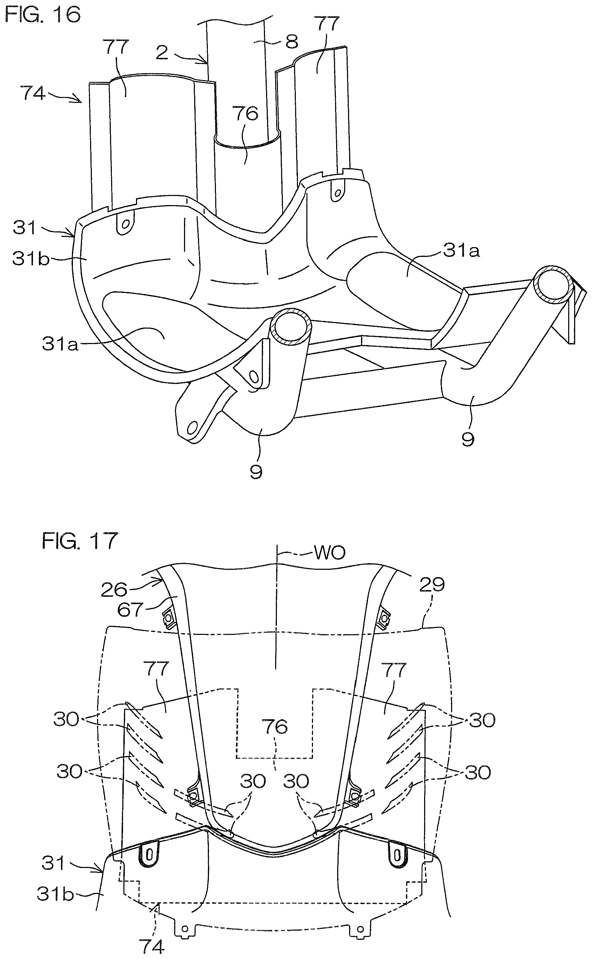

As shown in FIG. 16, the saddle type vehicle 1 includes a protector 74 extending upwardly from the flat foot board 31.

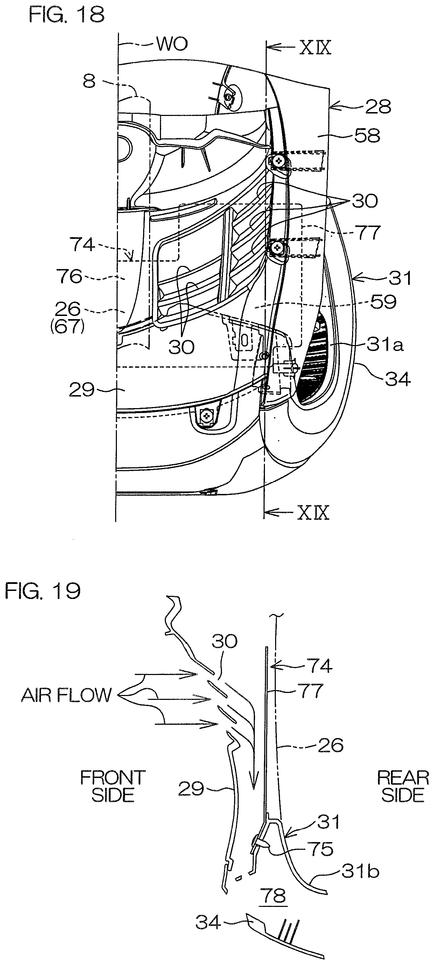

As shown in FIG. 17, the upper edge of the protector 74 is disposed at a higher position than the upper edge of the front end portion 31b of the flat foot board 31, whereas the lower edge of the protector 74 is disposed at a lower position than the upper edge of the front end portion 31b of the flat foot board 31. As shown in FIG. 19, the lower end of the protector 74 is disposed in front of the flat foot board 31. The lower end of the protector 74 is attached to the flat foot board 31 by a rivet 75. The protector 74 is supported by the flat foot board 31 in a cantilever manner. In other words, the upper end of the protector 74 equivalent to a free end is not held directly by other members, and is held by the rigidity of the protector 74 itself.

As shown in FIG. 16, the protector 74 includes a central protector 76 disposed behind the main frame 8 and a pair of side protectors 77 disposed on the rightward and leftward sides, respectively, with respect to the central protector 76. The central protector 76 and the side protector 77 are integrally-formed members. The protector 74 is made of an elastic material such as resin or rubber. The upper edge of each side protector 77 is disposed at a higher position than the upper edge of the central protector 76. Therefore, a recess that is concave downwardly is defined by the middle of the protector 74 in the vehicle width direction.

As shown in FIG. 18 and FIG. 19, the protector 74 is disposed behind the air hole 30 passing through the inner cover 29 in the front-rear direction. The protector 74 is disposed between the inner cover 29 and the inner panel 26 in the front-rear direction. The protector 74 and the air hole 30 overlap with each other in the front-rear direction. The protector 74 is disposed in front of a connection position between the front end portion 31b of the flat foot board 31 and the lower end of the inner panel 26 (see also FIG. 6). Additionally, the protector 74 is disposed in front of a connection position between the front end portion 31b of the flat foot board 31 and the lower end of the leg shield portion 59. The protector 74 is disposed in front of a connection position between the lower end of the inner panel 26 and the lower end of the leg shield portion 59. The protector 74 and each connection position overlap with each other in the front-rear direction.

As shown in FIG. 19, a wind generated by the traveling of the saddle type vehicle 1 flows to a space between the inner cover 29 and the inner panel 26 through the air hole 30 disposed at the inner cover 29. The protector 74 is disposed behind the air hole 30, and therefore the wind that has entered the space between the inner cover 29 and the inner panel 26 collides with the protector 74, and is guided downwardly toward the flat foot board 31. Thereafter, the wind that has arrived near the flat foot board 31 is guided to the engine 5 through a gas passage 78 defined between the flat foot board 31 and the undercover 34 in the up-down direction. As a result, the engine 5 is cooled by air.

On the other hand, there is a possibility that water will scatter toward the saddle type vehicle 1 while the saddle type vehicle 1 is traveling on a wet road surface. Therefore, there is a possibility that water will infiltrate between the inner cover 29 and the inner panel 26 through the air hole 30. However, the protector 74 is disposed behind the air hole 30, and therefore water that has infiltrated between the inner cover 29 and the inner panel 26 collides with the protector 74, and is guided downwardly toward the flat foot board 31. In other words, water is prevented from moving from in front of the protector 74 to a position behind the protector 74.

As described above, the protector 74 is disposed in front of a connection position between the lower end of the inner panel 26 and the lower end of the leg shield portion 59, in front of a connection position between the lower end of the inner panel 26 and the front end portion 31b of the flat foot board 31, and in front of a connection position between the lower end of the leg shield portion 59 and the front end portion 31b of the flat foot board 31. The legs of the driver sitting on the seat 3 are placed behind these connection positions. Therefore, there is a possibility that, if the protector 74 is not provided, water that has infiltrated between the inner cover 29 and the inner panel 26 will move rearwardly through a gap among the inner panel 26, the leg shield portion 59, and the flat foot board 31, and the legs of the driver will be wetted therewith. Therefore, the amount of water scattering toward the legs of the driver can be reduced by providing the protector 74.

As described above, in the present preferred embodiment, the side front cover 28 includes the front cover portion 58 and the leg shield portion 59. The front cover portion 58 and the leg shield portion 59 are formed integrally with each other.

When the front flasher 40 is moved outwardly in the vehicle width direction in order to heighten the discriminability between the headlight 39 and the front flasher 40, the width of the outer edge portion of the front cover portion 58 (i.e., a part from the outer end of the front flasher 40 to the outer edge of the front cover portion 58) is narrowed.

Additionally, when the length in the vehicle width direction of the storage pocket 70 is increased in order to increase the capacity of the storage pocket 70, the width of the outer edge portion of the leg shield portion 59 (i.e., a part from the outer end of the storage pocket 70 to the outer edge of the leg shield portion 59) is narrowed.

However, in the present preferred embodiment, the front cover portion 58 and the leg shield portion 59 are formed integrally with each other, and therefore the outer edge portion of the front cover portion 58 can be restrained from being reduced in rigidity even if the position at which the front flasher 40 is disposed is moved more outwardly. Likewise, the front cover portion 58 and the leg shield portion 59 are formed integrally with each other, and therefore the outer edge portion of the leg shield portion 59 can be restrained from being reduced in rigidity even if the length in the vehicle width direction of the storage pocket 70 is increased. As a result, the discriminability between the headlight 39 and the front flasher 40 can be heightened, and the capacity of the storage pocket 70 can be increased while securing the rigidity of the vehicle body cover 23.

Additionally, the front cover portion 58 and the leg shield portion 59 extend from the flat foot board 31 to a position higher than the front flasher 40. Therefore, each of the front cover portion 58 and the leg shield portion 59 has a long shape in the up-down direction in which it is comparatively weak against vibrations in the vehicle width direction.

However, in the saddle type vehicle 1 according to the present preferred embodiment, the front cover portion 58 extends rearwardly and outwardly from the front flasher 40, and the leg shield portion 59 formed integrally with the front cover portion 58 extends rearwardly and inwardly from the outer edge of the front cover portion 58 toward the storage pocket 70. Additionally, the integrally-formed portion between the front cover portion 58 and the leg shield portion 59 extends from the flat foot board 31 to a position higher than the front flasher 40.

In other words, in the saddle type vehicle 1 according to the present preferred embodiment, the cross section of the front cover portion 58 and the cross section of the leg shield portion 59 are shaped so as to be strong against vibrations in the vehicle width direction in addition to the fact that the front cover portion 58 and the leg shield portion 59 are formed integrally with each other. Additionally, the integrally-formed portion between the front cover portion 58 and the leg shield portion 59 extends from the flat foot board 31 to a position higher than the front flasher 40, and therefore rigidity against vibrations in the vehicle width direction is heightened within a wide range in the up-down direction.

Additionally, the side front cover 28 including the front cover portion 58 and the leg shield portion 59 is a member different from the central front cover 27 and different from the inner panel 26. Therefore, the degree of freedom in the shape of the side front cover 28 is higher than in a structure in which the side front cover 28 is formed integrally with the central front cover 27 and with the inner panel 26. Therefore, the side front cover 28 can be formed into the aforementioned shape. Additionally, it is more difficult for the vibrations of the central front cover 27 and the vibrations of the inner panel 26 to be transmitted to the side front cover 28 than in a structure in which the side front cover 28 is formed integrally with the central front cover 27 and with the inner panel 26. Therefore, the vibrations of the side front cover 28 can be reduced.

Road surface vibrations resulting from the ruggedness of a road surface and vibrations of the engine 5 are generated while the saddle type vehicle 1 is traveling. Generally, the rotation speed (number of revolutions) of the engine 5 varies within a wide range from 0 revolutions per minute (rpm) to several thousand revolutions per minute (rpm), and therefore the range of the frequency of engine vibrations is wider than the range of the frequency of road surface vibrations. The natural frequency of a conventional vehicle body cover falls within the range of the frequency of engine vibrations. On the other hand, in the present preferred embodiment, the rigidity of the side front cover 28 is made higher than in a conventional arrangement. Therefore, rigidity to endure not only road surface vibrations but also engine vibrations can be secured for the vehicle body cover.

Additionally, in the present preferred embodiment, the outer end of the flasher opening 42f at which the front flasher 40 is disposed is disposed at a more outward position than the outer end 70Eo of the left storage pocket 70L, and therefore at least a portion of the front flasher 40 is disposed at a more outward position than the outer end 70Eo of the left storage pocket 70L. As a result, the front flasher 40 occupies a more outward position, and the discriminability of the front flasher 40 is heightened. Moreover, the inner end of the flasher opening 42f is disposed at a more inward position than the outer end 70Eo of the left storage pocket 70L, and therefore the width of the storage pocket 70 is expanded, and the capacity of the storage pocket 70 is increased. Additionally, although the width of the outer edge portion of the leg shield portion 59 disposed at the side front cover 28 is narrowed by expanding the width of the storage pocket 70, the capacity of the storage pocket 70 can be increased while securing the rigidity of the vehicle body cover 23 because the front cover portion 58 and the leg shield portion 59 are formed integrally with each other as mentioned above.

Additionally, in the present preferred embodiment, in a cross section (see FIG. 15) of the saddle type vehicle 1 obtained by being cut by a horizontal plane passing through the front flasher 40 and the left storage pocket 70L, the length X1 in the front-rear direction from the outer edge 28Lo of the side front cover 28 to the rear end 59Eb of the leg shield portion 59 is smaller than the length X2 in the front-rear direction from the outer edge 28Lo of the side front cover 28 to the front end 58Ef of the front cover portion 58. Therefore, the length in the front-rear direction from the outer edge 28Lo of the side front cover 28, which is equivalent to the outer edge of the front cover portion 58 and equivalent to that of the leg shield portion 59, to the rear end 59Eb of the leg shield portion 59 is short.

The inner panel 26 defines the left storage pocket 70L. The leg shield portion 59 of the side front cover 28 is connected to the inner panel 26. Therefore, there is a possibility that a vehicle occupant will catch his/her hands on the inner panel 26, and a load by the vehicle occupant will be input to the inner panel 26 when the vehicle occupant takes an article into and from the left storage pocket 70L. The leg shield portion 59 is connected to the inner panel 26 as mentioned above, and therefore the load by the vehicle occupant is transmitted from the inner panel 26 to the leg shield portion 59.

If the length in the front-rear direction from the outer edge 28Lo of the side front cover 28 to the rear end 59Eb of the leg shield portion 59 is increased, the distance in the front-rear direction between the pocket forming portion 69r of the inner panel 26 equivalent to a power point to which the load by the vehicle occupant is input and the outer edge 28Lo of the side front cover 28 equivalent to an operating point will be increased. Therefore, there is a possibility that a great force will be applied to the outer edge 28Lo of the side front cover 28 when the vehicle occupant takes an article into and from the left storage pocket 70L. Therefore, a load applied to the side front cover 28 can be reduced when the vehicle occupant takes the article into and from the left storage pocket 70L, and the capacity of the left storage pocket 70L can be increased by shortening the length in the front-rear direction from the outer edge 28Lo of the side front cover 28 to the rear end 59Eb of the leg shield portion 59.

Additionally, in the present preferred embodiment, the length in the front-rear direction of the intermediate portion 641 of the leg shield portion 59 when the vehicle is viewed laterally is smaller than the length in the front-rear direction of the upper portion 631 of the leg shield portion 59 when the vehicle is viewed laterally. Additionally, the length in the front-rear direction of the intermediate portion 641 of the leg shield portion 59 when the vehicle is viewed laterally is smaller than the length in the front-rear direction of the lower portion 651 of the leg shield portion 59 when the vehicle is viewed laterally. The length in the front-rear direction of the intermediate portion 641 of the leg shield portion 59 is thus small, and therefore the capacity of the storage pocket 70 can be increased by expanding the width of the storage pocket 70. Additionally, even if the width of the storage pocket 70 is expanded, the rigidity of the side front cover 28 can be secured because the front cover portion 58 and the leg shield portion 59 are formed integrally with each other. Therefore, the capacity of the storage pocket 70 can be secured while securing the rigidity of the vehicle body cover 23.

The vehicle occupant puts his/her hand into the storage pocket 70 from above the storage pocket 70. Therefore, it becomes easier for the vehicle occupant to put the hand into the storage pocket 70 in proportion to a decrease in the length in the front-rear direction of the upper portion 631 of the leg shield portion 59. In the present preferred embodiment, the maximum value of the length in the front-rear direction of the lower portion 651 of the leg shield portion 59 when the vehicle is viewed laterally is greater than the maximum value of the length in the front-rear direction of the upper portion 631 of the leg shield portion 59 when the vehicle is viewed laterally. Therefore, the length in the front-rear direction of the upper portion 631 of the leg shield portion 59 is small, and it is easy for the vehicle occupant to put the hand into the storage pocket 70.

Additionally, although the maximum value of the length in the front-rear direction of the lower portion 651 of the leg shield portion 59 is comparatively large when the vehicle is viewed laterally, the maximum value of the length in the front-rear direction of the lower portion 73p of the inner panel 26 is comparatively small when the vehicle is viewed laterally, and therefore the length in the front-rear direction of a part including the leg shield portion 59 and the inner panel 26 can be restrained. As a result, a riding space in which the feet of the vehicle occupant (driver) are placed can be secured while restraining the front of the saddle type vehicle 1 from being enlarged.

Additionally, in the present preferred embodiment, the lower portion 73p of the inner panel 26 is disposed at a more inward position than the outer end 70Eo of the left storage pocket 70L in the vehicle width direction. The lower portion 651 of the leg shield portion 59 is connected to the lower portion 73p of the inner panel 26. The lower portion 73p of the inner panel 26 to which the lower portion 651 of the leg shield portion 59 is connected is thus disposed at a more inward position than the outer end 70Eo of the left storage pocket 70L in the vehicle width direction, and therefore the length in the vehicle width direction of the lower portion 651 of the leg shield portion 59 can be increased, and, as a result, the rigidity of the side front cover 28 can be heightened.

Additionally, in the present preferred embodiment, the front flasher 40 is long in the up-down direction. More specifically, as shown in FIG. 5, the distance in the up-down direction from the upper end 40Eu of the front flasher 40 to the lower end 40E1 of the front flasher 40 when the vehicle is viewed frontally is greater than the distance in the vehicle width direction from the outer end 40Eo of the front flasher 40 to the inner end (coinciding with the lower end 40E1) of the front flasher 40 when the vehicle is viewed frontally. In other words, the length in the up-down direction of the front flasher 40 is greater than the length in the vehicle width direction of the front flasher 40. Therefore, if the areas are equal to each other when the vehicle is viewed frontally, the inner end of the front flasher 40 can be made more apart from the headlight 39 in the vehicle width direction than in a structure in which the front flasher 40 is long in the vehicle width direction. Therefore, the discriminability of the front flasher 40 can be heightened.

Additionally, the front cover portion 58 and the leg shield portion 59 are formed integrally with each other, and the rigidity of the side front cover 28 is secured, and therefore the position at which the front flasher 40 is disposed can be moved more outwardly. As a result, the discriminability of the front flasher 40 can be made even higher. Additionally, although the range in which the width is narrowed in the outer edge portion of the front cover portion 58 will become long in the up-down direction, and a part in which the rigidity is reduced will spread in the up-down direction if the front flasher 40 is long in the up-down direction, the discriminability of the front flasher 40 can be heightened while restraining the rigidity of the outer edge portion of the front cover portion 58 from being reduced because the front cover portion 58 and the leg shield portion 59 are formed integrally with each other as mentioned above.

Additionally, in the present preferred embodiment, the central front cover 27 is divided into a plurality of covers. In detail, the central front cover 27 includes the headlight cover 47 at which at least a portion of the headlight 39 is disposed and the lower cover 48 disposed below the headlight cover 47. The central front cover 27 is thus divided into the plurality of covers, and therefore the degree of freedom in the shape of the central front cover 27 is high. Additionally, the headlight cover 47 and the lower cover 48 are different members that are separate from each other, and therefore it is difficult for the vibrations of the lower cover 48 to be transmitted to the headlight cover 47. At least a portion of the headlight 39 is disposed at the headlight cover 47. Therefore, the vibrations of the headlight 39 can be reduced.

Additionally, in the present preferred embodiment, the protector 74 is disposed behind the air hole 30 passing through the inner cover 29 in the front-rear direction. There is a possibility that water will scatter toward the saddle type vehicle 1 while the saddle type vehicle 1 is traveling on a wet road surface. Therefore, there is a possibility that water will infiltrate between the inner cover 29 and the inner panel 26 through the air hole 30. However, the protector 74 is disposed behind the air hole 30, and therefore water that has infiltrated between the inner cover 29 and the inner panel 26 collides with the protector 74, and is guided downwardly toward the flat foot board 31. In other words, water is prevented from moving from in front of the protector 74 to a position behind the protector 74. Therefore, the amount of water scattering toward the legs of the driver can be reduced.

Additionally, in the present preferred embodiment, the upper edge of the front end portion 31b of the flat foot board 31 is disposed at a lower position than the upper edge of the protector 74, and is disposed at a higher position than the lower edge of the protector 74. Therefore, the protector 74 is disposed in front of a connection position between the lower end of the inner panel 26 and the lower end of the leg shield portion 59, in front of a connection position between the lower end of the inner panel 26 and the front end portion 31b of the flat foot board 31, and in front of a connection position between the lower end of the leg shield portion 59 and the front end portion 31b of the flat foot board 31. The legs of the driver sitting on the seat 3 are placed behind these connection positions. Therefore, there is a possibility that, if the protector 74 is not provided, water that has infiltrated between the inner cover 29 and the inner panel 26 will move rearwardly through a gap among the inner panel 26, the leg shield portion 59, and the flat foot board 31, and the legs of the driver will be wetted therewith. Therefore, the amount of water scattering toward the legs of the driver can be reduced by providing the protector 74.

Although the preferred embodiment of the present invention has been described as above, the present invention is not limited to the contents of the aforementioned preferred embodiment, and can be variously modified within the scope of the appended claims.

For example, as described in the aforementioned preferred embodiment, the saddle type vehicle 1 is a scooter type motorcycle. However, the saddle type vehicle 1 may be a sports type motorcycle, or may be an off-road type motorcycle, or may be a moped. Alternatively, without being limited to a motorcycle, the saddle type vehicle 1 may be an all-terrain vehicle, or may be a snowmobile.

Additionally, as described in the aforementioned preferred embodiment, the outer end 70Eo of the left storage pocket 70L is disposed at a more inward position than the outer end of the flasher opening 42f. However, the outer end 70Eo of the left storage pocket 70L may be disposed at a more outward position than the outer end of the flasher opening 42f. If so, the width of the storage pocket 70 can be made even greater, and therefore the capacity of the storage pocket 70 can be increased.

Additionally, as described in the aforementioned preferred embodiment, the central front cover 27 is divided into the headlight cover 47 and the lower cover 48. However, the headlight cover 47 and the lower cover 48 may be integrally-formed members.

Additionally, as described in the aforementioned preferred embodiment, the protector 74 for waterproofing is disposed inside the front cover 25. However, the saddle type vehicle 1 is not necessarily required to include the protector 74.

## Claims

1. A saddle type vehicle (1) comprising:
a vehicle body frame (2) including a head tube (7) disposed at a center of the vehicle in a vehicle width direction;
a seat (3) disposed at a more rearward position than the head tube (7);
a flat foot board (31) disposed at a lower position than the seat (3) and at least a portion of which is disposed at a position more forward than the seat (3) and more rearward than the head tube (7);
a central front cover (27) disposed in front of the head tube (7);
a headlight (39) at least a portion of which is disposed at the central front cover (27);
an inner panel (26) disposed behind the head tube (7) and extending upwardly from the flat foot board (31);
a storage pocket (70) defined by the inner panel (26);
a left-and-right pair of side front covers (28) disposed at a more outward position in the vehicle width direction than the central front cover (27); and
a front flasher (40) at least a portion of which is disposed at the side front cover (28),
wherein the side front cover (28) is formed structurally-independently of the central front cover (27) and the inner panel (26),
wherein the side front cover (28) extends upwardly from the flat foot board (31) and is disposed at a more outward position in the vehicle width direction than the inner panel (26);
wherein the side front cover (28) includes a front cover portion (58); and
the front cover portion (58) of the side front cover (28) extends rearwardly and outwardly from the front flasher (40);
**characterized in that**
the side front cover (28) includes a leg shield portion (59) formed integrally with the front cover portion (58);
an integrally-formed portion (28Lo) of both the front cover portion (58) and the leg shield portion (59) extends from the flat foot board (31) to a position higher than the front flasher (40);
the front flasher (40) and at least a portion of the storage pocket (70) overlap with each other when the vehicle (1) is viewed frontally;
the inner panel (26) includes a lower portion (73p) disposed at a position lower than the storage pocket (70) and more inward than an outer end (70Eo) of the storage pocket (70) in the vehicle width direction and connected to a lower portion (651) of the leg shield portion (59);
the leg shield portion (59) of the side front cover (28) extends rearwardly and inwardly from an outer edge (28Lo) of the front cover portion (58) toward the storage pocket (70); and
a portion included in the leg shield portion (59) and extending rearwardly and inwardly from the outer edge (28Lo) of the front cover portion (58) includes:
an upper portion (63l) disposed at a higher position than a flasher opening (42f) inside which the front flasher (40) is disposed;
an intermediate portion (64l) disposed at a height between an upper end of the flasher opening (42f) and a lower end of the flasher opening (42f);
a lower portion (651) disposed at a lower position than the flasher opening (42f); and
the minimum value of a length in a front-rear direction of the intermediate portion (641) when the vehicle (1) is viewed laterally is smaller than the maximum value of a length in the front-rear direction of the lower portion (651) when the vehicle (1) is viewed laterally.

2. The saddle type vehicle (1) according to claim 1, wherein the front flasher (40) is disposed inside a flasher opening (42f) that is open at an outer surface of the side front cover (28), and
wherein an outer end (70Eo) of the storage pocket (70) is disposed at a position more inward than an outer end of the flasher opening (42f) in the vehicle width direction and more outward than an inner end of the flasher opening (42f) in the vehicle width direction.

3. The saddle type vehicle (1) according to claim 1 or claim 2, wherein a length (X1) in a front-rear direction from the outer edge (28Lo) of the front cover portion (58) to a rear end of the leg shield portion (59) is smaller than a length (X2) in the front-rear direction from the outer edge (28Lo) of the front cover portion (58) to a front end of the front cover portion (58) in a cross section of the saddle type vehicle (1) obtained by being cut by a horizontal plane passing through the front flasher (40) and through the storage pocket (70).

4. The saddle type vehicle (1) according to any one of claim 1 to claim 3, wherein the front flasher (40) is disposed inside the flasher opening (42f) that is open at the outer surface of the side front cover (28), and
wherein a minimum value of a length in the front-rear direction of the intermediate portion (64l) of the leg shield portion (59) when the vehicle (1) is viewed laterally is smaller than a maximum value of a length in the front-rear direction of the upper portion (631) of the leg shield portion (59) when the vehicle (1) is viewed laterally.

5. The saddle type vehicle (1) according to any one of claim 1 to claim 4, wherein the front flasher (40) is disposed inside the flasher opening (42f) that is open at the outer surface of the side front cover (28),
wherein the inner panel (26) includes an upper portion (71p) disposed at a higher position than the storage pocket (70),
wherein a maximum value of a length in the front-rear direction of the lower portion (651) of the leg shield portion (59) when the vehicle (1) is viewed laterally is greater than a maximum value of a length in the front-rear direction of the upper portion (631) of the leg shield portion (59) when the vehicle (1) is viewed laterally, and
wherein a maximum value of a length in the front-rear direction of the upper portion (71p) of the inner panel (26) when the vehicle (1) is viewed laterally is greater than a maximum value of a length in the front-rear direction of the lower portion (73p) of the inner panel (26) when the vehicle (1) is viewed laterally.

6. The saddle type vehicle (1) according to any one of claim 1 to claim 5, wherein the front flasher (40) is disposed inside the flasher opening (42f) that is open at the outer surface of the side front cover (28), and wherein the inner panel (26) includes an upper portion (71p) disposed at a higher position than the storage pocket (70).

7. The saddle type vehicle (1) according to any one of claim 1 to claim 6, wherein a length in the up-down direction of the front flasher (40) is greater than a length in the vehicle width direction of the front flasher (40).

8. The saddle type vehicle (1) according to any one of claim 1 to claim 7, wherein the central front cover (27) includes:
a headlight cover (47) at which at least a portion of the headlight (39) is disposed; and
a lower cover (48) disposed below the headlight cover (47) and formed structurally-independent of the headlight cover (47).

9. The saddle type vehicle (1) according to any one of claim 1 to claim 8, further comprising:
a front fork (11) attached to the head tube (7);
a front wheel (Wf) attached to the front fork (11);
an inner cover (29) disposed at a position more rearward than the front wheel (Wf) and more forward than the inner panel (26) and disposed between the pair of the side front covers (28) in the vehicle width direction; and
a protector (74) disposed between the inner cover (29) and the inner panel (26) in the front-rear direction and disposed behind an air hole (30) passing through the inner cover (29) in the front-rear direction.

10. The saddle type vehicle (1) according to claim 9, wherein an upper edge of the protector (74) is disposed at a higher position than an upper edge of a front end portion of the flat foot board (31), and
a lower edge of the protector (74) is disposed at a lower position than the upper edge of the front end portion of the flat foot board (31).

## Patentansprüche

1. Ein Fahrzeug vom Satteltyp (1), das folgende Merkmale aufweist:
einen Fahrzeugkarosserierahmen (2), der einen Lenkkopf (7) aufweist, der in einer Breitenrichtung des Fahrzeugs in einer Mitte des Fahrzeugs angeordnet ist;
einen Sitz (3), der in einer Position angeordnet ist, die sich weiter hinten befindet als der Lenkkopf (7);
ein flaches Fußteil (31), das in einer weiter unten als der Sitz (3) befindlichen Position angeordnet ist, wobei zumindest ein Teil desselben in einer Position angeordnet ist, die sich weiter vorne befindet als der Sitz (3) und weiter hinten als der Lenkkopf (7);
eine mittige Frontabdeckung (27), die vor dem Lenkkopf (7) angeordnet ist;
einen Scheinwerfer (39), von dem zumindest ein Teil an der mittigen Frontabdeckung (27) angeordnet ist;
eine Innenblende (26), die hinter dem Lenkkopf (7) angeordnet ist und sich von dem flachen Fußteil (31) aus nach oben erstreckt;
ein durch die Innenblende (26) definierter Stauraum (70);
ein Rechts/Links-Paar seitlicher Frontabdeckungen (28), das in der Breitenrichtung des Fahrzeugs in einer Position angeordnet ist, die sich weiter außen befindet als die mittige Frontabdeckung (27); und
einen Vorderblinker (40), von dem zumindest ein Teil an der seitlichen Frontabdeckung (28) angeordnet ist,
wobei die seitliche Frontabdeckung (28) strukturell unabhängig von der mittigen Frontabdeckung (27) und der Innenblende (26) gebildet ist,
wobei sich die seitliche Frontabdeckung (28) von dem flachen Fußteil (31) aus nach oben erstreckt und in einer Position angeordnet ist, die in der Breitenrichtung des Fahrzeugs weiter außen liegt als die Innenblende (26);
wobei die seitliche Frontabdeckung (28) einen Frontabdeckungsabschnitt (58) umfasst; und
sich der Frontabdeckungsabschnitt (58) der Seitenfrontabdeckung (28) von dem Vorderblinker (40) aus nach hinten und nach außen erstreckt;
**dadurch gekennzeichnet, dass**
die seitliche Frontabdeckung (28) einen Beinabschirmabschnitt (59) umfasst, der einstückig mit dem Frontabdeckungsabschnitt (58) gebildet ist;
sich ein einstückig gebildeter Abschnitt (28Lo) sowohl des Frontabdeckungsabschnitts (58) als auch des Beinabschirmabschnitts (59) von dem flachen Fußteil (31) aus bis zu einer höher als der Vorderblinker (40) gelegenen Position erstreckt;
der Vorderblinker (40) und zumindest ein Teil des Stauraums (70) einander überlappen, wenn das Fahrzeug (1) von vorne betrachtet wird;
die Innenblende (26) einen unteren Abschnitt (73p) umfasst, der in einer Position angeordnet ist, die sich in der Breitenrichtung des Fahrzeugs weiter unten befindet als der Stauraum (70) und weiter innen als ein Außenende (70Eo) des Stauraums (70), und der mit einem unteren Abschnitt (65l) des Beinabschirmabschnitts (59) verbunden ist;
sich der Beinabschirmabschnitt (59) der seitlichen Frontabdeckung (28) von einer Außenkante (28Lo) des Frontabdeckungsabschnitts (58) aus nach hinten und nach innen hin zu dem Stauraum (70) erstreckt; und
ein Abschnitt, der in dem Beinabschirmabschnitt (59) enthalten ist und sich von der Außenkante (28Lo) des Frontabdeckungsabschnitts (58) aus nach hinten und nach innen erstreckt, folgende Merkmale umfasst:
einen oberen Abschnitt (631), der in einer höheren Position angeordnet ist als eine Blinkeröffnung (42f), in der der Vorderblinker (40) angeordnet ist;
einen Zwischenabschnitt (641), der auf einer Höhe zwischen einem oberen Ende der Blinkeröffnung (42f) und einem unteren Ende der Blinkeröffnung (42f) angeordnet ist;
einen unteren Abschnitt (651), der in einer weiter unten als die Blinkeröffnung (42f) gelegenen Position angeordnet ist; und
der Minimalwert einer Länge in einer von vorne nach hinten verlaufenden Richtung des Zwischenabschnitts (64l) dann, wenn das Fahrzeug (1) von der Seite betrachtet wird, geringer ist als der Maximalwert einer Länge in der von vorne nach hinten verlaufenden Richtung des unteren Abschnitts (65l), wenn das Fahrzeug (1) von der Seite betrachtet wird.

2. Das Fahrzeug vom Satteltyp (1) gemäß Anspruch 1, bei dem der Vorderblinker (40) in einer Blinkeröffnung (42f) angeordnet ist, die an einer Außenoberfläche der seitlichen Frontabdeckung (28) offen ist, und
bei dem ein Außenende (70Eo) des Stauraums (70) in einer Position angeordnet ist, die in der Breitenrichtung des Fahrzeugs weiter innen liegt als ein Außenende der Blinkeröffnung (42f) und in der Breitenrichtung des Fahrzeugs weiter außen liegt als ein Innenende der Blinkeröffnung (42f).

3. Das Fahrzeug vom Satteltyp (1) gemäß Anspruch 1 oder Anspruch 2, bei dem in einem Querschnitt des Fahrzeugs vom Satteltyp (1), der erhalten wird, indem es durch eine horizontale Ebene durchschnitten wird, die durch den Vorderblinker (40) und durch den Stauraum (70) verläuft, eine Länge (X1) in einer von vorne nach hinten verlaufenden Richtung von der Außenkante (28Lo) des Frontabdeckungsabschnitts (58) zu einem hinteren Ende des Beinabschirmabschnitts (59) geringer ist als eine Länge (X2) in der von vorne nach hinten verlaufenden Richtung von der Außenkante (28Lo) des Frontabdeckungsabschnitts (58) zu einem vorderen Ende des Frontabdeckungsabschnitts (58).

4. Das Fahrzeug vom Satteltyp (1) gemäß einem der Ansprüche 1 bis 3,
bei dem der Vorderblinker (40) in der Blinkeröffnung (42f), die an der Außenoberfläche der seitlichen Frontabdeckung (28) offen ist, angeordnet ist, und
bei dem ein Minimalwert einer Länge in der von vorne nach hinten verlaufenden Richtung des Zwischenabschnitts (64l) des Beinabschirmabschnitts (59) dann, wenn das Fahrzeug (1) von der Seite betrachtet wird, kleiner ist als ein Maximalwert einer Länge in der von vorne nach hinten verlaufenden Richtung des oberen Abschnitts (63l) des Beinabschirmabschnitts (59), wenn das Fahrzeug (1) von der Seite betrachtet wird.

5. Das Fahrzeug vom Satteltyp (1) gemäß einem der Ansprüche 1 bis 4,
bei dem der Vorderblinker (40) in der Blinkeröffnung (42f) angeordnet ist, die an der Außenoberfläche der seitlichen Frontabdeckung (28) offen ist,
bei dem die Innenblende (26) einen oberen Abschnitt (71p) umfasst, der in einer höheren Position angeordnet ist als der Stauraum (70),
bei dem ein Maximalwert einer Länge in der von vorne nach hinten verlaufenden Richtung des unteren Abschnitts (65l) des Beinabschirmabschnitts (59) dann, wenn das Fahrzeug (1) von der Seite betrachtet wird, größer ist als ein Maximalwert einer Länge in der von vorne nach hinten verlaufenden Richtung des oberen Abschnitts (63l) des Beinabschirmabschnitts (59), wenn das Fahrzeug (1) von der Seite betrachtet wird, und
bei dem ein Maximalwert einer Länge in der von vorne nach hinten verlaufenden Richtung des oberen Abschnitts (71p) der Innenblende (26) dann, wenn das Fahrtzeug (1) von der Seite betrachtet wird, größer ist als ein Maximalwert einer Länge in der von vorne nach hinten verlaufenden Richtung des unteren Abschnitts (73p) der Innenblende (26), wenn das Fahrzeug (1) von der Seite betrachtet wird.

6. Das Fahrzeug vom Satteltyp (1) gemäß einem der Ansprüche 1 bis 5, bei dem der Vorderblinker (40) in der Blinkeröffnung (42f) angeordnet ist, die an der Außenoberfläche der seitlichen Frontabdeckung (28) offen ist, und bei dem die Innenblende (26) einen oberen Abschnitt (71 p) umfasst, der in einer höheren Position angeordnet ist als der Stauraum (70).

7. Das Fahrzeug vom Satteltyp (1) gemäß einem der Ansprüche 1 bis 6, bei dem eine Länge in der von oben nach unten verlaufenden Richtung des Vorderblinkers (40) größer ist als eine Länge, in der Breitenrichtung des Fahrzeugs, des Vorderblinkers (40).

8. Das Fahrzeug vom Satteltyp (1) gemäß einem der Ansprüche 1 bis 7, bei dem die mittige Frontabdeckung (27) folgende Merkmale umfasst:
eine Scheinwerferabdeckung (47), an der zumindest ein Teil des Scheinwerfers (39) angeordnet ist; und
eine untere Abdeckung (48), die unter der Scheinwerferabdeckung (47) angeordnet und strukturell unabhängig von der Scheinwerferabdeckung (47) gebildet ist.

9. Das Fahrzeug vom Satteltyp (1) gemäß einem der Ansprüche 1 bis 8, das ferner folgende Merkmale aufweist:
eine an dem Lenkkopf (7) befestigte Vorderradgabel (11);
ein an der Vorderradgabel (11) befestigtes Vorderrad (Wf);
eine Innenabdeckung (29), die in einer Position angeordnet ist, die weiter hinten gelegen ist als das Vorderrad (Wf) und weiter vorne gelegen ist als die Innenblende (26), und in der Breitenrichtung des Fahrzeugs zwischen dem Paar der seitlichen Frontabdeckungen (28) angeordnet ist; und
eine Schutzvorrichtung (74), die in der von vorne nach hinten verlaufenden Richtung zwischen der Innenabdeckung (29) und der Innenblende (26) angeordnet ist und in der von vorne nach hinten verlaufenden Richtung hinter einem Luftloch (30) angeordnet ist, das durch die Innenabdeckung (29) verläuft.

10. Das Fahrzeug vom Satteltyp (1) gemäß Anspruch 9, bei dem eine Oberkante der Schutzvorrichtung (74) in einer Position angeordnet ist, die höher gelegen ist als eine Oberkante eines Vorderendabschnitts des flachen Fußteils (31), und
eine Unterkante der Schutzvorrichtung (74) in einer Position angeordnet ist, die weiter unten gelegen ist als die Oberkante des Vorderendabschnitts des flachen Fußteils (31).

## Revendications

1. Véhicule de type à selle (1), comprenant:
un châssis de carrosserie de véhicule (2) comportant un tube de direction (7) disposé au centre du véhicule dans le sens de la largeur du véhicule;
un siège (3) disposé en une position plus en arrière que le tube de direction (7);
une plaque de pied plane (31) disposée en une position plus basse que le siège (3) et dont au moins une partie est disposée en une position plus en avant que le siège (3) et plus en arrière que le tube de direction (7);
un couvercle avant central (27) disposé avant le tube de direction (7);
un projecteur (39) dont au moins une partie est disposée sur le couvercle avant central (27);
un panneau intérieur (26) disposé derrière le tube de direction (7) et s'étendant vers le haut à partir de la plaque de pied plane (31);
une poche de rangement (70) définie par le panneau intérieur (26);
une paire gauche et droite de couvercles avant latéraux (28) disposée en une position plus vers l'extérieur dans le sens de la largeur du véhicule que le couvercle avant central (27); et
un clignotant avant (40) dont au moins une partie est disposée sur le couvercle avant latéral (28),
dans lequel le couvercle avant latéral (28) est formé de manière structurellement indépendante du couvercle avant central (27) et du panneau intérieur (26),
dans lequel le couvercle avant latéral (28) s'étend vers le haut à partir de la plaque de pied plane (31) et est disposé en une position plus vers l'extérieur dans le sens de la largeur du véhicule que le panneau intérieur (26);
dans lequel le couvercle avant latéral (28) comporte une partie de couvercle avant (58); et
la partie de couvercle avant (58) du couvercle avant latéral (28) s'étend vers l'arrière et vers l'extérieur à partir du clignotant avant (40);
**caractérisé par le fait que**
le couvercle avant latéral (28) comporte une partie de protection de jambe (59) formée de manière solidaire avec la partie de couvercle avant (58);
une partie formée de manière solidaire (28Lo) tant avec la partie de couvercle avant (58) qu'avec la partie de protection de jambe (59) s'étend de la plaque de pied plane (31) à une position plus haute que le clignotant avant (40);
le clignotant avant (40) et au moins une partie de la poche de rangement (70) se chevauchent mutuellement lorsque le véhicule (1) est vu de face;
le panneau intérieur (26) comporte une partie inférieure (73p) disposée en une position plus basse que la poche de rangement (70) et plus vers l'intérieur qu'une extrémité extérieure (70Eo) de la poche de rangement (70) dans le sens de la largeur du véhicule et connectée à une partie inférieure (651) de la partie de protection de jambe (59);
la partie de protection de jambe (59) du couvercle avant latéral (28) s'étend vers l'arrière et vers l'intérieur à partir d'un bord extérieur (28Lo) de la partie de couvercle avant (58) vers la poche de rangement (70); et
une partie incluse dans la partie de protection de jambe (59) et s'étendant vers l'arrière et vers l'intérieur à partir du bord extérieur (28Lo) de la partie de couvercle avant (58) comporte:
une partie supérieure (631) disposée en une position plus haute qu'une ouverture de clignotant (42f) dans laquelle est disposé le clignotant avant (40);
une partie intermédiaire (641) disposée à une hauteur entre une extrémité supérieure de l'ouverture de clignotant (42f) et une extrémité inférieure de l'ouverture de clignotant (42f);
une partie inférieure (651) disposée en une position plus basse que l'ouverture de clignotant (42f); et
la valeur minimale d'une longueur dans une direction avant-arrière de la partie intermédiaire (641) lorsque le véhicule (1) est vu de côté est inférieure à la valeur maximale d'une longueur dans la direction avant-arrière de la partie inférieure (651) lorsque le véhicule (1) est vu de côté.

2. Véhicule de type à selle (1) selon la revendication 1, dans lequel le clignotant avant (40) est disposé à l'intérieur d'une ouverture de clignotant (42f) qui est ouverte à une surface extérieure du couvercle avant latéral (28), et
dans lequel une extrémité extérieure (70Eo) de la poche de rangement (70) est disposée en une position plus vers l'intérieur qu'une extrémité extérieure de l'ouverture de clignotant (42f) dans le sens de largeur du véhicule et plus vers l'extérieur qu'une extrémité intérieure de l'ouverture de clignotant (42f) dans le sens de la largeur du véhicule.

3. Véhicule de type à selle (1) selon la revendication 1 ou la revendication 2, dans lequel une longueur (X1) dans une direction avant-arrière à partir du bord extérieur (28Lo) de la partie de couvercle avant (58) à une extrémité arrière de la partie de protection de jambe (59) est plus petite qu'une longueur (X2) dans la direction avant-arrière à partir du bord extérieur (28Lo) de la partie de couvercle avant (58) à une extrémité avant de la partie de couvercle avant (58) en vue en coupe du véhicule de type selle (1) obtenue par découpe d'un plan horizontal passant par le clignotant avant (40) et à travers la poche de rangement (70).

4. Véhicule de type à selle (1) selon l'une quelconque de la revendication 1 à la revendication 3, dans lequel le clignotant avant (40) est disposé à l'intérieur de l'ouverture de clignotant (42f) qui est ouverte à la surface extérieure du couvercle avant latéral (28), et
dans lequel une valeur minimale d'une longueur dans la direction avant-arrière de la partie intermédiaire (641) de la partie de protection de jambe (59) lorsque le véhicule (1) est vu de côté est inférieure à une valeur maximale d'une longueur dans la direction avant-arrière de la partie supérieure (631) de la partie de protection de jambe (59) lorsque le véhicule (1) est vu de côté.

5. Véhicule de type à selle (1) selon l'une quelconque de la revendication 1 à la revendication 4, dans lequel le clignotant avant (40) est disposé à l'intérieur de l'ouverture de clignotant (42f) qui est ouverte à la surface extérieure du couvercle avant latéral (28),
dans lequel le panneau intérieur (26) comporte une partie supérieure (71p) disposée en une position plus haute que la poche de rangement (70),
dans lequel une valeur maximale d'une longueur dans la direction avant-arrière de la partie inférieure (651) de la partie de protection de jambe (59) lorsque le véhicule (1) est vu de côté est supérieure à une valeur maximale d'une longueur dans la direction avant-arrière de la partie supérieure (631) de la partie de protection de jambe (59) lorsque le véhicule (1) est vu de côté, et
dans lequel une valeur maximale d'une longueur dans la direction avant-arrière de la partie supérieure (71p) du panneau intérieur (26) lorsque le véhicule (1) est vu de côté est supérieure à une valeur maximale d'une longueur dans la direction avant-arrière de la partie inférieure (73p) du panneau intérieur (26) lorsque le véhicule (1) est vu de côté.

6. Véhicule de type à selle (1) selon l'une quelconque de la revendication 1 à la revendication 5, dans lequel le clignotant avant (40) est disposé à l'intérieur de l'ouverture de clignotant (42f) qui est ouverte à la surface extérieure du couvercle avant latéral (28), et dans lequel le panneau intérieur (26) comporte une partie supérieure (71p) disposée en une position plus haute que la poche de rangement (70).

7. Véhicule de type à selle (1) selon l'une quelconque de la revendication 1 à la revendication 6, dans lequel une longueur dans la direction haut-bas du clignotant avant (40) est supérieure à une longueur dans le sens de la largeur du véhicule du clignotant avant (40).

8. Véhicule de type à selle (1) selon l'une quelconque de la revendication 1 à la revendication 7, dans lequel le couvercle avant central (27) comporte:
un couvercle de phare (47) sur lequel est disposée au moins une partie du projecteur (39); et
un couvercle inférieur (48) disposé au-dessous du couvercle de phare (47) et formé de manière structurellement indépendante du couvercle de phare (47).

9. Véhicule de type à selle (1) selon l'une quelconque de la revendication 1 à la revendication 8, comprenant par ailleurs:
une fourche avant (11) fixée au tube de direction (7);
une roue avant (Wf) fixée à la fourche avant (11);
un couvercle intérieur (29) disposé en une position plus en arrière que la roue avant (Wf) et plus en avant que le panneau intérieur (26) et disposé entre la paire de couvercles avant latéraux (28) dans le sens de la largeur du véhicule; et
un protecteur (74) disposé entre le couvercle intérieur (29) et le panneau intérieur (26) dans la direction avant-arrière et disposé derrière un trou d'air (30) passant à travers le couvercle intérieur (29) dans la direction avant-arrière.

10. Véhicule de type à selle (1) selon la revendication 9, dans lequel un bord supérieur du protecteur (74) est disposé en une position plus haute qu'un bord supérieur d'une partie d'extrémité avant de la plaque de pied plane (31), et
un bord inférieur du protecteur (74) est disposé en une position plus basse que le bord supérieur de la partie d'extrémité avant de la plaque de pied plane (31).
